(19) Europäisches Patentamt
European Patent Office
Office européen des brevets

(11) EP 4 190 854 A1

(12) EUROPEAN PATENT APPLICATION
published in accordance with Art. 153(4) EPC

(43) Date of publication:
**07.06.2023 Bulletin 2023/23**

(21) Application number: **21853602.7**

(22) Date of filing: **03.08.2021**

(51) International Patent Classification (IPC):
***C08K 5/521*** (2006.01) ***C08L 27/12*** (2006.01)
***C08L 27/18*** (2006.01) ***C08J 9/04*** (2006.01)
***H01B 13/14*** (2006.01) ***H01B 7/02*** (2006.01)

(52) Cooperative Patent Classification (CPC):
**C08J 9/04; C08K 5/20; C08K 5/521; C08L 27/12; C08L 27/18; H01B 3/44; H01B 7/02; H01B 13/00; H01B 13/14**

(86) International application number:
**PCT/JP2021/028802**

(87) International publication number:
**WO 2022/030500 (10.02.2022 Gazette 2022/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.08.2020 JP 2020132039**

(71) Applicant: **Daikin Industries, Ltd.**
**Osaka-shi, Osaka 530-0001 (JP)**

(72) Inventors:
- **ISHII, Kenji**
**Osaka-shi, Osaka 530-8323 (JP)**
- **TOKUDA, Masato**
**Osaka-shi, Osaka 530-8323 (JP)**

(74) Representative: **Hoffmann Eitle**
**Patent- und Rechtsanwälte PartmbB**
**Arabellastraße 30**
**81925 München (DE)**

# (54) FOAM MOLDING COMPOSITION, FOAMED MOLDED BODY, ELECTRIC WIRE, METHOD FOR MANUFACTURING FOAMED MOLDED BODY, AND METHOD FOR MANUFACTURING ELECTRIC WIRE

(57) An object of the present disclosure is to provide a foam molding composition from which there can be produced a foam molded body and a foamed electric wire which are small in the average cell size, high in the foaming ratio, and little in generation of sparks, without using any fluorine-based surfactant. The foam molding composition containing a fluororesin (A) and a compound (B) having a pyrolysis temperature of 300°C or higher and a solubility parameter (SP value) of 8 to 15.

[Fig. 1]

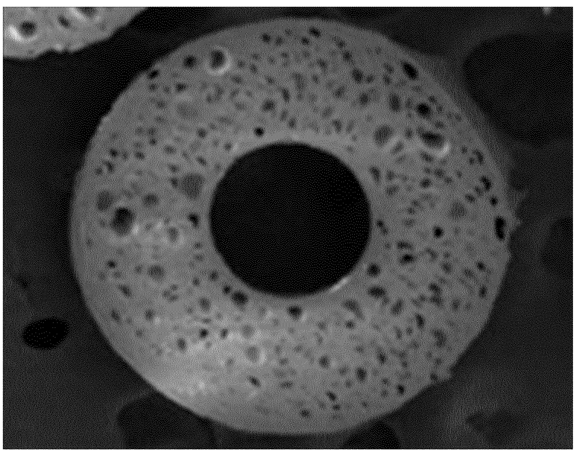

EP 4 190 854 A1

## Description

### Technical Field

The present disclosure relates to a foam molding composition, a foam molded body, an electric wire, a method for producing a foam molded body and a method for producing an electric wire.

### Background Art

For covering materials of electric wires, reduction of the dielectric constant is desired in order to improve the electric characteristics, and for the reduction of the dielectric constant, making the covering materials to be foams is effective. The foams using a resin as their materials are obtained usually by foam molding in which the resin melted is molded in the state that gas is made to be present in the resin.

It is preferable that cells in the foam are fine and homogeneously distributed, in order to make the shape and characteristics of the foam obtained to be uniform. For the purpose of micronization and distribution uniformization of the cells, there is a method of making a foam nucleating agent to be present in the resin so as to make a starting point to generate the cells during foam molding.

The foam nucleating agent to be added in a resin such as a fluororesin may be, for example, a sulfonate salt. As methods of obtaining foams by blending a sulfonate salt, there are the following disclosures.

Patent Literature 1 describes a method of foaming a melt processable fluoropolymeric resin in the presence of a boron nitride nucleating agent and (a) at least one polyatomic anion-containing inorganic salt or (b) at least one sulfonic acid or phosphonic acid or a salt thereof, or (c) a combination of (a) and (b).

Patent Literature 2 discloses a composition characterized in containing a fluororesin (A) and a compound (B) being a sulfonic acid represented by the following formula (1) or the following formula (2), or a salt thereof:

$$F(CF_2)_nSO_3H \cdots \qquad (1)$$

wherein n is 4 or 5,

$$F(CF_2)_nCH_2CH_2SO_3H \cdots \qquad (2)$$

wherein n is 4 or 5.

Patent Literature 3 discloses a foam nucleating agent which contains at least one compound selected from the group consisting of phosphate complex compounds (a-1) and phosphorus-based ester compounds (a-2), and has an average particle size of 0.01 μm to 300 μm, and a composition for a foam, which contains the foam nucleating agent and a resin component (B) being at least one component selected from the group consisting of elastomers (b-1) and thermoplastic resins (b-2) .

Patent Literature 4 discloses a composition for a wallpaper which is made by adding a foaming agent and an aromatic cyclic phosphoric acid ester salt having a specific structure as a foam nucleating agent to a thermoplastic elastomer.

### Citation List

#### Patent Literature

Patent Literature 1: Japanese Patent Laid-Open No. 10-45931
Patent Literature 2: Japanese Patent Laid-Open No. 2014-224229
Patent Literature 3: Japanese Patent Laid-Open No. 2013-147566
Patent Literature 4: Japanese Patent Laid-Open No. 11-130892

### Summary of Invention

#### Technical Problem

An object of the present disclosure is to provide a foam molding composition from which there can be produced a foam molded body and a foamed electric wire which are small in the average cell size, high in the foaming ratio, and

little in generation of sparks, without using any fluorine-based surfactant.

Solution to Problem

The present disclosure relates to a foam molding composition which comprises a fluororesin (A) and a compound (B) having a pyrolysis temperature of 300°C or higher and a solubility parameter (SP value) of 8 to 15.

It is preferable that the compound (B) is a compound which comprises at least one partial structure selected from the group consisting of aromatic rings, phosphoric acid ester groups and amide groups.

It is preferable that the compound (B) is a compound containing one or more C6-14 aromatic rings, or a salt thereof.

It is preferable that the compound (B) is at least one compound selected from the group consisting of phosphoric acid esters, salts thereof, phosphoric acid ester complex compounds, and compounds having two or more amide groups.

It is preferable that the salt of the compound (B) is a salt with an alkali metal or an alkaline earth metal.

It is preferable that the compound (B) is at least one of compounds represented by the following formulae (1), (2), (3) and (4).

[Formula 1]

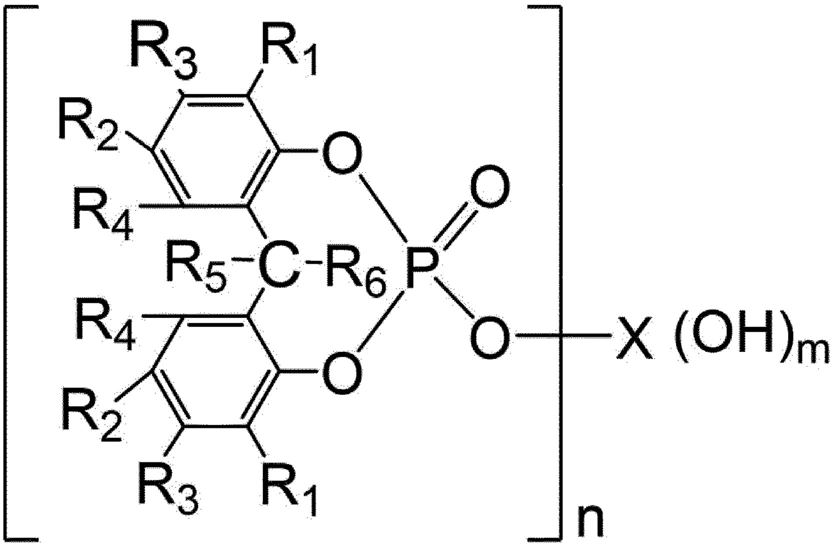

(1)

[Formula 2]

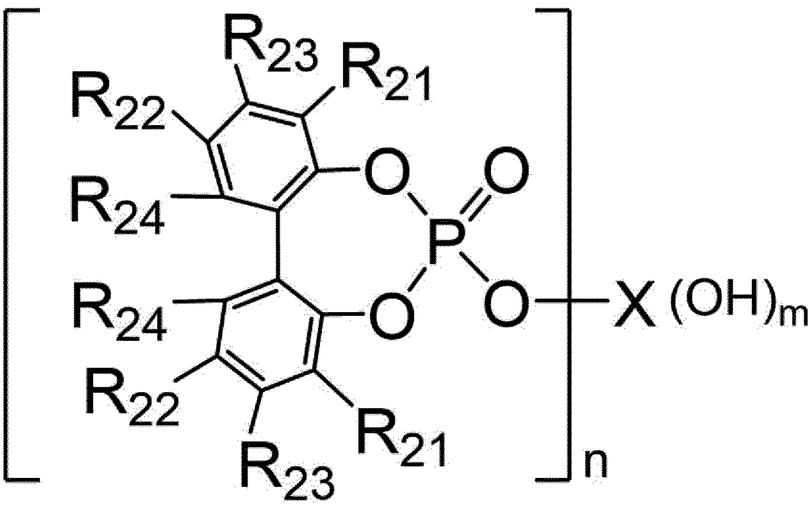

(2)

[Formula 3]

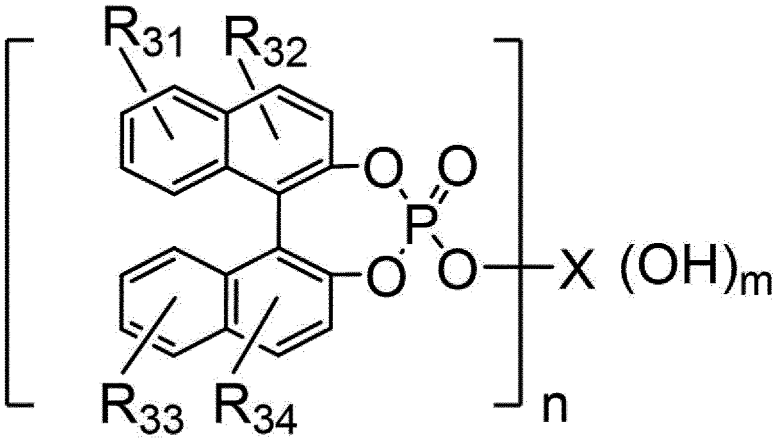

(3)

[Formula 4]

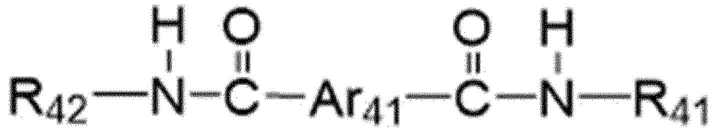

(4)

wherein $R_1$, $R_2$, $R_3$, $R_4$, $R_{21}$, $R_{22}$, $R_{23}$, $R_{24}$, $R_{31}$, $R_{32}$, $R_{33}$, $R_{34}$, $R_{41}$ and $R_{42}$ each represent a hydrogen atom, an alkyl group or cycloalkyl group having 1 to 8 carbon atoms, or an aryl group, alkylaryl group or arylalkyl group having 6 to 12 carbon atoms; $Ar_{41}$ represents an aryl group; $R_5$ and $R_6$ each represent a hydrogen atom or a methyl group; and n represents an integer of 1 or 2, m represents an integer of 0 to 2, and X represents a m+n-valent metal.

It is preferable that $R_1$, $R_2$, $R_{21}$, $R_{22}$, $R_{31}$ and $R_{33}$ in the above formulae (1), (2) and (3) are each an alkyl group having 1 to 8 carbon atoms.

It is preferable that X in the above formulae (1), (2) and (3) is at least one among sodium, potassium, rubidium, calcium and barium.

It is preferable that the compound (B) is an aromatic cyclic phosphoric acid ester salt represented by the above formula (1).

It is preferable that the above compound (B) is 2,2'-methylenebis(4,6-di-t-butylphenyl) sodium phosphate.

It is preferable that the fluororesin (A) is a melt processable fluororesin.

It is preferable that the fluororesin (A) is at least one selected from the group consisting of tetrafluoroethylene/hexafluoropropylene-based copolymers, tetrafluoroethylene/perfluoro(alkyl vinyl ether) copolymers and tetrafluoroethylene/ethylene-based copolymers.

It is preferable that the fluororesin (A) is a fluororesin having been subjected to a fluorination treatment.

It is preferable that the foam molding composition is substantially free from fluorine-based low-molecular weight compound.

The present disclosure is also a foam molded body characterized in being obtained from the above-mentioned foam molding composition.

It is preferable that the foam molded body is substantially free from fluorine-based low-molecular weight compound.

The present disclosure is also an electric wire characterized in comprising a core wire and a covering material covering the core wire and obtained from the above-mentioned foam molding composition.

It is preferable that the electric wire is substantially free from fluorine-based low-molecular weight compound.

The present disclosure is also a foamed electric wire characterized in having a core wire and a fluororesin layer or a fluororesin composition layer covering the core wire, wherein the fluororesin layer or the fluororesin composition layer contains cells, wherein the average aspect ratio of the cells is 1.9 or lower, in observation of a cut surface parallel to the lengthwise direction of the foamed electric wire.

The present disclosure is also a foamed electric wire characterized in having a core wire and a fluororesin layer or a fluororesin composition layer covering the core wire, wherein the fluororesin layer or the fluororesin composition layer contains cells, wherein the presence proportion of cells having an aspect ratio of 3 or higher is 13% or lower with

respect to the total amount of cells measured in the observation of the cut surface parallel to the lengthwise direction of the foamed electric wire, in observation of a cut surface parallel to the lengthwise direction of the foamed electric wire.

The present disclosure is also a foamed electric wire characterized in having a core wire and a fluororesin layer or a fluororesin composition layer covering the core wire, wherein the fluororesin layer or the fluororesin composition layer contains cells, wherein the standard deviation of the aspect ratios of the cells is 1.3 or lower, in observation of a cut surface parallel to the lengthwise direction of the foamed electric wire.

The present disclosure is also a foamed electric wire characterized in having a core wire and a fluororesin layer or a fluororesin composition layer covering the core wire, wherein the fluororesin layer or the fluororesin composition layer contains cells, wherein the foaming ratio is 35% or higher and the surface roughness is 9.0 μm or smaller.

It is preferable that in the above-mentioned foamed electric wire, wherein the average cell size of the cells is 40 μm or smaller, in observation of a cut surface perpendicular to the lengthwise direction of the foamed electric wire.

The present disclosure is also a method for producing a foam molded body, characterized in comprising foam molding the above-mentioned foam molding composition.

The present disclosure is also a method for producing an electric wire, characterized in comprising covering a core wire with the above-mentioned foam molding composition to obtain the electric wire.

Advantageous Effects of Invention

The foam molding composition of the present disclosure having the above constitution enables to produce a foam molded body and a foamed electric wire which are high in the foaming ratio, small in the average cell size, little in generation of sparks, low in variations in the outer diameter and the electrostatic capacity and smooth in the surface.

Brief Description of Drawings

[FIG. 1]FIG. 1 is a cross-sectional photograph of an electric wire obtained in Example 1.
[FIG. 2]FIG. 2 is a cross-sectional photograph of an electric wire obtained in Example 2.
[FIG. 3]FIG. 3 is a cross-sectional photograph of an electric wire obtained in Example 3.
[FIG. 4]FIG. 4 is a cross-sectional photograph of an electric wire obtained in Example 4.
[FIG. 5]FIG. 5 is a cross-sectional photograph of an electric wire obtained in Comparative Example 2.
[FIG. 6]FIG. 6 is a cross-sectional photograph of an electric wire obtained in Comparative Example 3.
[FIG. 7]FIG. 7 is a cross-sectional photograph of an electric wire obtained in Comparative Example 4.
[FIG. 8]FIG. 8 is a cross-sectional photograph of an electric wire obtained in Comparative Example 5.
[FIG. 9]FIG. 9 is a cross-sectional photograph of an electric wire obtained in Comparative Example 6.
[FIG. 10]FIG. 10 is a cross-sectional photograph of an electric wire obtained in Comparative Example 7.
[FIG. 11]FIG. 11 is a cross-sectional photograph of an electric wire obtained in Comparative Example 8.
[FIG. 12]FIG. 12 is a photograph of surfaces of electric wires obtained in Example 1.
[FIG. 13]FIG. 13 is a photograph of surfaces of electric wires obtained in Example 2.
[FIG. 14]FIG. 14 is a photograph of surfaces of electric wires obtained in Example 3.
[FIG. 15]FIG. 15 is a photograph of surfaces of electric wires obtained in Example 4.
[FIG. 16]FIG. 16 is a photograph of surfaces of electric wires obtained in Comparative Example 2.
[FIG. 17]FIG. 17 is a photograph of surfaces of electric wires obtained in Comparative Example 3.
[FIG. 18]FIG. 18 is a photograph of surfaces of electric wires obtained in Comparative Example 4.
[FIG. 19]FIG. 19 is a photograph of surfaces of electric wires obtained in Comparative Example 5.
[FIG. 20]FIG. 20 is a photograph of surfaces of electric wires obtained in Comparative Example 6.
[FIG. 21]FIG. 21 is a photograph of surfaces of electric wires obtained in Comparative Example 7.
[FIG. 22]FIG. 22 is a photograph of surfaces of electric wires obtained in Comparative Example 8.
[FIG. 23]FIG. 23 is a cross-sectional photograph of an electric wire obtained in Example 5.
[FIG. 24]FIG. 24 is a photograph of surfaces of electric wires obtained in Example 5.
[FIG. 25]FIG. 25 is a cross-sectional photograph of an electric wire obtained in Example 6.
[FIG. 26]FIG. 26 is a photograph of surfaces of electric wires obtained in Example 6.

Description of Embodiments

The present disclosure has been made by a finding that the use of a specific compound (B) in a foaming resin containing a fluorine-based polymer as a base resin enables good foaming to be provided.

The compound (B) has a pyrolysis temperature of 300°C or higher and a solubility parameter (SP value) of 8

to 15. Many conventional foam nucleating agents have a relatively low pyrolysis temperature and melting point. Although the case where the molding temperature of a resin is low nevertheless poses no problem, in a molding composition containing a resin having a high melting point, there is such a problem that the foam nucleating agent is pyrolyzed or melted during the molding process and does not efficiently act as a foam nucleating agent. In particular, in the case of using a fluororesin being a high-melting point resin, there occur disadvantages including the coloring and the generation of decomposed gas, the gigantic enlargement of the cell size, the worsening of the surface condition and the deterioration of electric characteristics, making it difficult for both of physical properties of the fluororesin and characteristics as a foam molded body to be simultaneously satisfied.

The present disclosure signifies that it has been found that the use of the compound (B) leads to exhibition of good foamability of a composition containing the fluororesin (A), and further, good characteristics are exhibited even in the case of molding at high temperatures, so that the above-mentioned advantageous effects can be attained.

Hereinafter, the present disclosure will be described in detail.

The fluororesin (A) is not limited as long as being melt processable, and examples thereof include tetrafluoroethylene (TFE)/hexafluoropropylene (HFP)-based copolymers, TFE/perfluoro(alkyl vinyl ether) (PAVE) copolymers, TFE/ethylene-based copolymers [ETFE], chlorotrifluoroethylene (CTFE)/ethylene copolymers [ECTFE], polyvinylidene fluoride [PVdF], polychlorotrifluoroethylene [PCTFE], TFE/vinylidene fluoride (VdF) copolymers [VT], polyvinyl fluoride [PVF], TFE/VdF/CTFE copolymers [VTC], TFE/ethylene/HFP copolymers and TFE/HFP/VdF copolymers.

Examples of the PAVE include perfluoro(methyl vinyl ether) [PMVE], perfluoro(ethyl vinyl ether) [PEVE] and perfluoro(propyl vinyl ether) [PPVE]. Among these, PPVE is preferable. These can be used singly in one kind or in two or more kinds.

The fluororesin may be one having a polymerization unit based on another monomer in an amount in the range of not impairing the intrinsic property of the fluororesin. The another monomer can suitably be selected from, for example, TFE, HFP, ethylene, propylene, perfluoro(alkyl vinyl ether), perfluoroalkylethylene, hydrofluoroolefin, fluoroalkylethylene, or perfluoro(alkyl allyl ether). It is preferable that the perfluoroalkyl group constituting the another monomer has 1 to 10 carbon atoms.

The fluororesin is preferably a TFE/HFP-based copolymer, a TFE/PAVE copolymer or a TFE/ethylene-based copolymer, and more preferably a TFE/HFP-based copolymer or a TFE/PAVE copolymer, since these have excellent heat resistance. The fluororesin may be used concurrently in two or more kinds thereof. The fluororesin is preferably also a perfluororesin, since it has better electric characteristics.

In the TFE/HFP-based copolymer, TFE/HFP is, in mass ratio, preferably 80 to 97/3 to 20 and more preferably 84 to 92/8 to 16.

The TFE/HFP-based copolymer may be a binary copolymer composed of TFE and HFP, or may also be a ternary copolymer composed of TFE and HFP and a comonomer copolymerizable therewith (for example, TFE/HFP/PAVE copolymer).

It is also preferable that the TFE/HFP-based copolymer is a TFE/HFP/PAVE copolymer containing a polymerization unit based on PAVE.

In the TFE/HFP/PAVE copolymer, TFE/HFP/PAVE is, in mass ratio, preferably 70 to 97/3 to 20/0.1 to 10 and more preferably 81 to 92/5 to 16/0.3 to 5.

In the TFE/PAVE copolymer, TFE/PAVE is, in mass ratio, preferably 90 to 99/1 to 10 and more preferably 92 to 97/3 to 8.

In the TFE/ethylene-based copolymer, TFE/ethylene is, in molar ratio, preferably 20 to 80/20 to 80 and more preferably 40 to 65/35 to 60. Then, the TFE/ethylene-based copolymer may contain another monomer component.

That is, the TFE/ethylene-based copolymer may be a binary copolymer composed of TFE and ethylene, or may also be a ternary copolymer composed of TFE and ethylene and a comonomer copolymerizable therewith (for example, TFE/ethylene/HFP copolymer).

It is also preferable that the TFE/ethylene-based copolymer is a TFE/ethylene/HFP copolymer containing a polymerization unit based on HFP. In the TFE/ethylene/HFP copolymer, TFE/ethylene/HFP is, in molar ratio, preferably 40 to 65/30 to 60/0.5 to 20 and more preferably 40 to 65/30 to 60/0.5 to 10.

The melt flow rate (MFR) of the fluororesin is preferably 0.1 to 500 g/10 min, more preferably 4 to 100 g/10 min and still more preferably 10 to 80 g/10 min; and the MFR is further still more preferably 34 to 50 g/10 min and especially preferably 35 to 40 g/10 min, since the generation of sparks can be suppressed and the foaming ratio becomes high.

The MFR is a value measured according to ASTM D-1238 by using a die of 2.1 mm in diameter and 8 mm in length at a load of 5 kg and 372°C.

The fluororesin can be synthesized by polymerizing monomer components by a usual polymerization method, for example, emulsion polymerization, suspension polymerization, solution polymerization, bulk polymerization or gas phase polymerization. In the polymerization reaction, a chain transfer agent such as methanol may be used in some cases. The fluororesin may be produced by polymerization and isolation without using a metal ion-containing reagent.

The fluororesin may be one in which sites of at least one of the polymer main chain and polymer side chains

have terminal groups such as $-CF_3$ and $-CF_2H$, and is not limited, but is preferably a fluororesin having been subjected to fluorination treatment. Fluororesins having been subjected to no fluorination treatment have terminal groups (hereinafter, such terminal groups are referred also as "unstable terminal groups") unstable thermally and electrically, such as -COOH, - $CH_2OH$, -COF and $-CONH_2$, in some cases. Such unstable terminal groups can be lessened by the fluorination treatment. It is preferable that the fluororesin contains few or none of the unstable terminal groups, and it is more preferable that the number of the total of the unstable terminal groups of the above four kinds and the $-CF_2H$ terminal group is 50 or less per $1 \times 10^6$ carbon atoms. When the number exceeds 50, there arises a risk of occurrence of molding failure. The number of the unstable terminal groups is more preferably 20 or less and still more preferably 10 or less. In the present description, the number of the unstable terminal groups is a value obtained by infrared absorption spectrometry. It may also be that the unstable terminal groups and the $-CF_2H$ terminal group are not present and all are $-CF_3$ terminal groups.

The fluorination treatment can be carried out by bringing a fluororesin having been subjected to no fluorination treatment into contact with a fluorine-containing compound.

The fluorine-containing compound is not limited, but includes fluorine radical sources which generate fluorine radicals under a fluorination treatment condition. The fluorine radical sources include $F_2$ gas, $CoF_3$, $AgF_2$, $UF_6$, $OF_2$, $N_2F_2$, $CF_3OF$ and halogen fluorides (for example, $IF_5$ and $ClF_3$).

The fluorine radical source such as $F_2$ gas may be one having a concentration of 100%, but from the viewpoint of safety, it is preferable to use the fluorine radical source by being mixed with an inert gas to be diluted therewith to 5 to 50% by mass, preferably 15 to 30% by mass. The inert gas includes nitrogen gas, helium gas and argon gas, but nitrogen gas is preferable from the economical viewpoint.

The condition of the fluorination treatment is not limited, and a fluororesin in a melted state may be brought into contact with a fluorine-containing compound, but the fluorination treatment can be carried out usually at a temperature equal to or lower than the melting point of the fluororesin, preferably at a temperature of 20 to 220°C, more preferably 100 to 200°C. The fluorination treatment is carried out usually for 1 to 30 hours, preferably for 5 to 20 hours.

It is preferable that the fluorination treatment involves bringing a fluororesin having been subjected to no fluorination treatment into contact with fluorine gas ($F_2$ gas).

The fluororesin (A) is not limited, but it is desirable that: the melting point of the fluororesin (A) is 200°C or higher; the molding temperature is 250°C or higher; and the pyrolysis temperature is 300°C or higher, since there can be obtained a foam molded body excellent in heat resistance and having a wide continuous use temperature range from the fluororesin (A). Further, the melting point is more preferably 250°C or higher, and preferably 300°C or lower. The molding temperature is more preferably 300°C or higher, and preferably 450°C or lower. The pyrolysis temperature is more preferably 350°C or higher and still more preferably 400°C or higher. The upper limits of the melting point, the molding temperature and the pyrolysis temperature are 600°C or lower.

In the present description, the melting point is a temperature measured by a differential scanning calorimeter (DSC); the molding temperature is a usually recommended temperature suitable for molding, and the temperature at which the fluororesin (A) has flowability and no resin deterioration such as coloring occurs; and the pyrolysis temperature is a 1%-weight loss temperature when the fluororesin (A) is heated in air at 10°C/min in TG (heat weight change measurement). Provided that there is excluded the weight loss amount by volatilization of water contained and crystal water occurring at between 100°C and 200°C. The "having flowability" means that the MFR at the temperature is 0.0001 or higher.

In order to reduce the signal loss of communication electric wires, the dielectric constant of the fluororesin (A) is preferably 3.0 or lower, more preferably 2.6 or lower and most preferably 2.1 or lower. The lower limit is 1.0 or higher. Similarly, the dielectric loss tangent is preferably 0.01 or less, more preferably 0.001 or lower and most preferably 0.0004 or lower. The lower limit is 0.0001 or higher. The dielectric constant and the dielectric loss tangent are measured by a cavity resonator method at a frequency of 6 GHz.

The content of the fluororesin (A) is, with respect to 100 parts by mass of the foam molding composition, preferably 50 parts by mass or higher, more preferably 80 parts by mass or higher, still more preferably 90 parts by mass or higher, further still more preferably 95 parts by mass or higher and especially preferably 98 parts by mass or higher. The upper limit is 99.999 parts by mass or lower and more preferably 99.99 parts by mass or lower.

The compound (B) acting as a foam nucleating agent in the present disclosure is a compound having a pyrolysis temperature of 300°C or higher and a solubility parameter (SP value) of 8 to 15.

In the present disclosure, it is needed that the pyrolysis temperature of the compound (B) is 300°C or higher, since there can be obtained a foam molded body excellent in heat resistance and having a wide continuous use temperature range. The pyrolysis temperature is more preferably 350°C or higher and still more preferably 400°C or higher. The upper limit is preferably 600°C or lower.

The measurement of the pyrolysis temperature can be carried out as in the above-mentioned fluororesin (A).

In order to effectively exhibit the advantageous effects of the present disclosure, it is desirable that the compound (B) is not melted at the molding temperature. Hence, the melting point of the compound (B) is preferably 200°C or higher,

more preferably 300°C or higher, further, more preferably 350°C or higher and most preferably 400°C or higher. The melting point of the compound (B) is a temperature which can be ascertained by a TGA peak in TG measurement, and for example, in the case where no peak can be observed at 400°C or lower, it is conceivable that the melting point is 400°C or higher. Whether or not the compound is melted at the peak temperature is checked by use in combination of observation by a heating microscope or in an electric furnace, or the like.

The solubility parameter (SP value) of the compound (B) is 8 to 15. Due to that the SP value is in the above range, the additive particles can be dispersed homogeneously, whereby foaming can be carried out uniformly and finely. Further, such an effect can be attained that there is suppressed the generation of gigantic particles by reaggregation of the particles in foam molding, whereby there are reduced irregularities on the electric wire surface caused by the gigantic particles and the surface can be made smooth.

The SP value is preferably 9 or higher and more preferably 10 or higher. Then, the SP value is preferably 14 or lower, more preferably 13 or lower and still more preferably 12 or lower.

The SP value can be determined by the Fedors expression (Polym. Eng. Sci., 14[2], 147(1974)).

It is preferable that the compound (B) is a compound which comprises at least one partial structure selected from the group consisting of aromatic rings, phosphoric acid ester groups and amide groups. For example, in the case where the compound (B) contains aromatic rings, it is preferable that the compound (B) is a compound containing one or more C6-14 aromatic rings, or a salt thereof.

In the case where the compound (B) contains an amide group(s), it is preferable that the compound (B) is a compound having two or more amide groups. Such a compound is not limited, and for example, a compound represented by the following formula (4) is preferable.

[Formula 5]

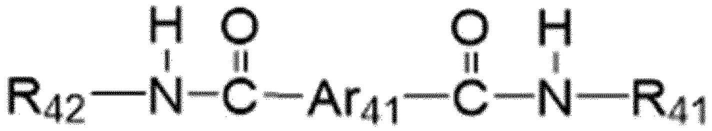

(4)

In the formula, $R_{41}$ and $R_{42}$ each represent a hydrogen atom, an alkyl group or cycloalkyl group having 1 to 8 carbon atoms, or an aryl group, alkylaryl group or arylalkyl group having 6 to 12 carbon atoms; and $Ar_{41}$ represents an aryl group.

The compound more specifically includes N,N'-dicyclohexyl-2,6-naphthalenedicarboxamide (trade name: NJSTAR NU-100, New Japan Chemical Co., Ltd.).

In the case where the compound (B) contains a phosphoric acid ester group, it is preferable that the compound (B) is at least one compound selected from the group consisting of phosphoric acid esters and salts thereof and phosphoric acid ester complex compounds. A phosphoric acid ester compound usable as the compound (B) is representatively a phosphoric acid ester, a phosphorous acid ester, an acidic phosphate ester, an acidic phosphite ester or a salt thereof with ammonia, an amine, melamine, an alkali metal, an alkaline earth metal or the like, and the specific structure thereof is not limited.

Specific examples thereof include acidic phosphate esters or acidic phosphite esters, such as triphenyl phosphate, trilauryl phosphate, tristearyl phosphate, trioleyl phosphate, xylene diphenyl phosphate, ethyl diphenyl phosphate, isopropyl diphenyl phosphate, n-butyl diphenyl phosphate, 2-ethylhexyl diphenyl phosphate, isodecyl diphenyl phosphate, cetyl diphenyl phosphate, stearyl diphenyl phosphate, oleyl diphenyl phosphate, butyl dicresyl phosphate, octyl dicresyl phosphate, lauryl dicresyl phosphate, dibutyl pyrophosphate, monophenyl acid phosphate, diphenyl acid phosphate, monocresyl acid phosphate, dicresyl acid phosphate, monoxylenyl acid phosphate, 2-acryloyloxyethyl acid phosphate, 2-methacryloyloxyethyl acid phosphate, diphenyl (2-acryloyloxyethyl) phosphate, diphenyl (2-methacryloyloxyethyl) phosphate, trinaphthyl phosphate, trinonylphenyl phosphate, tris(2,6-dimethylphenyl) phosphate, tetraphenyl resorcinol diphosphate, tetraphenyl hydroquinone diphosphate, tetraphenyl bisphenol A diphosphate, tetra(2,6-dimethylphenyl) resorcinol diphosphate, tetra(2,6-dimethylphenyl) bisphenol A diphosphate, tetra(2,6-dimethylphenyl) biphenyl diphosphate, tetraphenylethylene glycol diphosphate, bis(2,6-dimethylphenyl) pentaerythritol diphosphate and dixylenyl acid phosphate, and salts of acidic phosphate esters or acidic phosphite esters with ammonia, an amine, a melamine, an alkali metal or an alkaline earth metal, such as ammonium salts of dimethyl phosphate, diethyl phosphate, ethyl phosphate and di-n-butyl phosphate, a triethanolamine salt of dibutoxyethyl phosphate, a morpholine salt of dioctyl phosphate, soda salts of mono-n-butyl phosphate, an ammonium salt of diphenyl phosphate, a melamine salt of diphenyl phosphate, a piperazine salt of diphenyl phosphate, ammonium salts of phenyl phosphate, an ethylenediamine salt of dicresyl phosphate, soda salts of cresyl phosphate and a melamine salt of dixylenyl phosphate.

More specific examples include salts of phosphoric acid esters, such as bis(4-t-butylphenyl) sodium phosphate

and 2,2'-methylenebis(4,6-di-t-butylphenyl) sodium phosphate, and a sodium salt of 2-hydroxy-2-oxo-4,6,10,12-tetra-t-butyl-1,3,2-dibenzo[d,g]perhydrodioxaphosphocin, a barium salt of bisphenol phosphoric acid diester, a sodium salt of binaphthyl phosphoric acid diester and bis(4-nitrophenyl) sodium phosphate. Then, the ester may be a mono-ester, a di-ester, a tri-ester or a more poly-ester. These may be used singly in one kind or in a combination of two or more kinds.

Above all, aromatic phosphoric acid esters are preferable; salts of aromatic phosphoric acid esters are more preferable; and salts of aromatic phosphoric acid esters having a cyclic structure are still more preferable. More preferably, the salts of aromatic phosphoric acid esters having a cyclic structure are salts of cyclic phosphoric acid esters having a biphenyl structure, a binaphthyl structure or a benzhydryl structure. Here, these benzene rings and naphthalene rings may have an alkyl group or cycloalkyl group having 1 to 8 carbon atoms, or an aryl group, alkylaryl group or arylalkyl group having 6 to 12 carbon atoms.

As the salts of aromatic phosphoric acid ester having the cyclic structure, at least one selected from the group consisting of aromatic cyclic phosphoric acid ester salts represented by the following formulae (1), (2) and (3) is preferable.

[Formula 6]

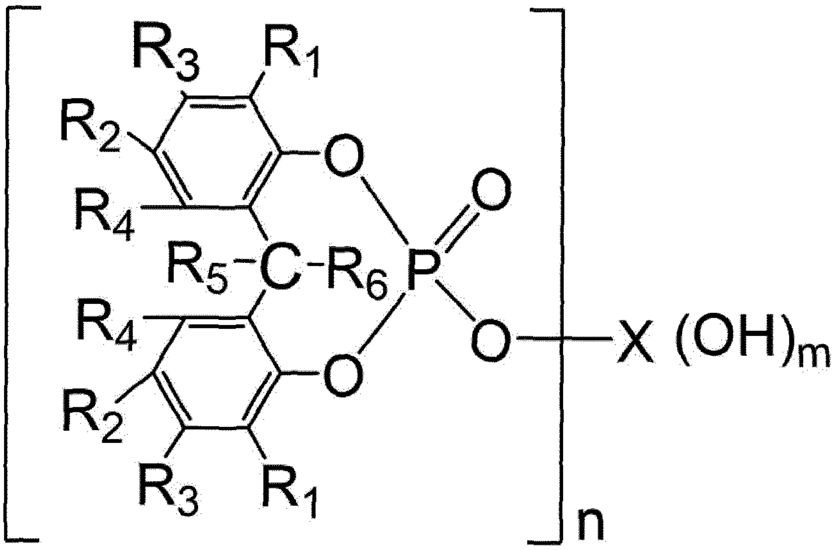

(1)

[Formula 7]

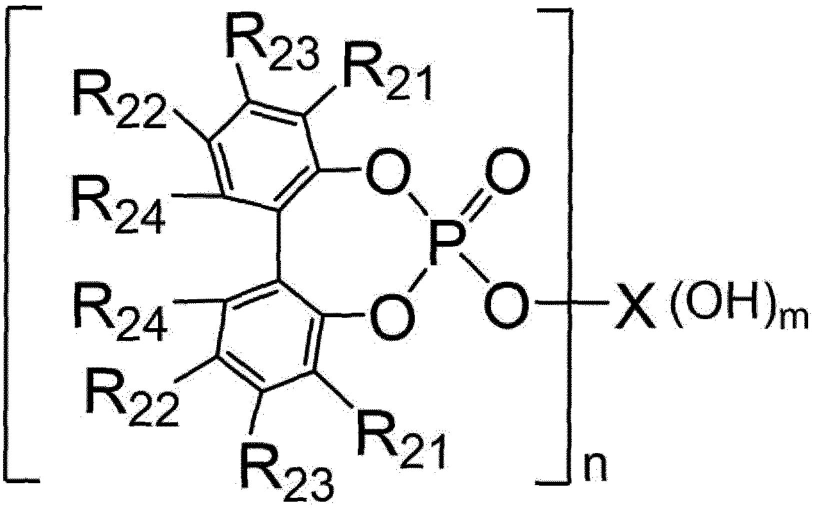

(2)

[Formula 8]

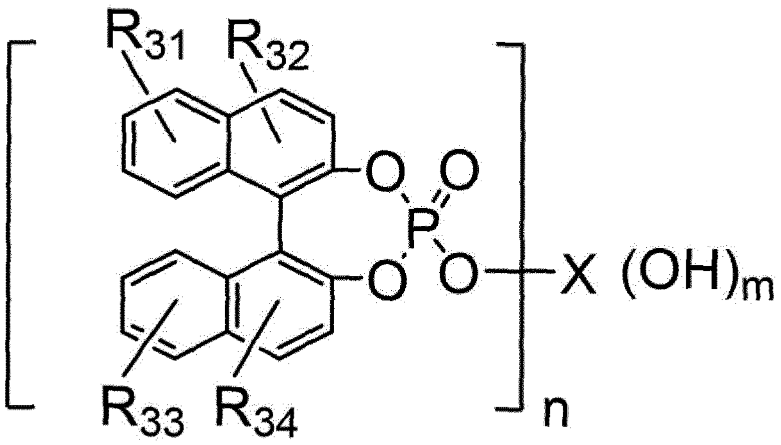

(3)

In the formula, $R_1$, $R_2$, $R_3$, $R_4$, $R_{21}$, $R_{22}$, $R_{23}$, $R_{24}$, $R_{31}$, $R_{32}$, $R_{33}$ and $R_{34}$ each represent a hydrogen atom, an alkyl group or cycloalkyl group having 1 to 8 carbon atoms, or an aryl group, alkylaryl group or arylalkyl group having 6 to 12 carbon atoms; $R^5$ and $R^6$ each represent a hydrogen atom or a methyl group; n represents an integer of 1 or 2; m represents an integer of 0 to 2; and X represents a m+n-valent metal.

Examples of the alkyl groups represented by $R_1$, $R_2$, $R_3$, $R_4$, $R_{21}$, $R_{22}$, $R_{23}$, $R_{24}$, $R_{31}$, $R_{32}$, $R_{33}$ and $R_{34}$ include methyl, ethyl, propyl, isopropyl, butyl, isobutyl, sec-butyl, tert-butyl, amyl, isoamyl, sec-amyl, tert-amyl, hexyl, isohexyl, heptyl, octyl, isooctyl, 2-ethylhexyl and tert-octyl. The cycloalkyl groups include cyclopentyl, cyclohexyl and cycloheptyl. Among these, alkyl groups having 1 to 4 carbon atoms, and a t-butyl group are preferable.

The aryl groups represented by $R_1$, $R_2$, $R_3$, $R_4$, $R_{21}$, $R_{22}$, $R_{23}$, $R_{24}$, $R_{31}$, $R_{32}$, $R_{33}$ and $R_{34}$ include phenyl, naphthyl and biphenyl. The alkylaryl groups include 4-methylphenyl, 4-tert-butylphenyl and nonylphenyl. The arylalkyl groups include benzyl, phenethyl and cumyl.

The metal represented by X includes alkali metals such as lithium, sodium, potassium and rubidium, alkaline earth metals such as magnesium calcium and barium, and aluminum, zinc and titanium. Among these, at least one among sodium, potassium, rubidium, calcium and barium are preferable; and sodium or barium is more preferable.

Above all, it is preferable that the compound (B) is an aromatic cyclic phosphoric acid ester salt represented by the above formula (1), and more specifically, 2,2'-methylenebis(4,6-di-t-butylphenyl) sodium phosphate represented by the following formula (5) is most preferable.

[Formula 9]

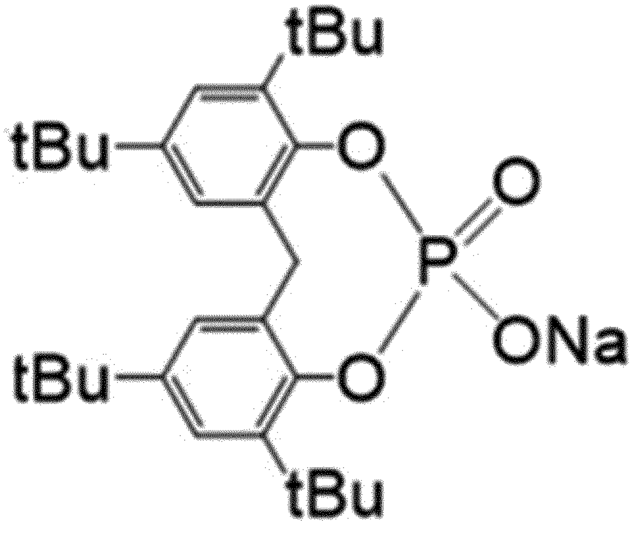

(5)

The phosphoric acid ester complex compound usable as the compound (B) is a complex composed of a metal and an organic compound having a phosphoric acid ester, and a specific structure thereof is not limited. Examples of

the organic compound constituting the complex compound include bis(4,4',6,6'-tetra-t-butyl-2,2'-methylene-diphenyl phosphate, 2,2'-methylene-bis(4,6-di-t-butylphenyl) phosphate, 2,2'-methylene-bis(4,6-di-methylphenyl) phosphate, 2,2'-methylene-bis(4,6-di-methylphenyl) phosphate, 2,2'-methylene-bis(4,6-diethylphenyl) phosphate, 2,2'-methylene-bis(4-methyl-6-t-butylphenyl) phosphate, 2,2'-methylene-bis(4-ethyl-6-t-butylphenyl) phosphate, 2,2'-ethylidene-bis(4,6-di-t-butylphenyl) phosphate, 2,2'-ethylidene-bis(4-i-propyl-6-t-butylphenyl) phosphate, 2,2'-ethylidene-bis(4-m-butyl-6-t-butylphenyl) phosphate, 2,2'-butylidene-bis(4,6-dimethylphenyl) phosphate, 2,2'-butylidene-bis(4,6-di-t-butylphenyl) phosphate, 2,2'-t-octylmethylene-bis(4,6-dimethylphenyl) phosphate, 2,2'-t-octylmethylene-bis(4,6-di-t-butylphenyl) phosphate, bis[2,2'-thiobis(4-ethyl-6-t-butylphenyl) phosphate], bis[2,2'-thiobis-(4,6-di-t-butylphenyl) phosphate], bis[2,2'-thiobis-(4-t-octylphenyl) phosphate], bis[2,2'-methylene-bis(4,6-di-t-butylphenyl) phosphate], bis[2,2'-ethylidene-bis(4,6-di-t-butylphenyl) phosphate], bis[(4,4'-dimethyl-6,6'-di-t-butyl-2,2'-biphenyl) phosphate], (4,4'-dimethyl-5,6'-di-t-butyl-2,2'-biphenyl) phosphate, tris[2,2'-methylene-bis(4,6-di-t-butylphenyl) phosphate], tris[2,2'-ethylidene-bis(4,6-di-t-butylphenyl) phosphate], phenyl bisdodecyl phosphate, phenyl ethyl hydrogen phosphate, phenyl bis(3,5,5-trimethylhexyl) phosphate, ethyl diphenyl phosphate, 2-ethylhexyl di(tolyl) phosphate, diphenyl hydrogen phosphate, methylene diphenyl phosphate, bis(2-ethylhexyl) p-tolyl phosphate, tritolyl phosphate, bis(2-ethylhexyl) phenyl phosphate, di(nonyl) phenyl phosphate, phenyl methyl hydrogen phosphate, di(dodecyl) p-tolyl phosphate, p-tolyl bis(2,5,5-trimethylhexyl) phosphate, 2-ethynylhexyl diphenyl phosphate, tri(butoxyethyl) phosphate, trioctyl phosphate, tricresyl phosphate, cresyl diphenyl phosphate, diethyl chlorophosphate, diphenyl chlorophosphate, diethyl bromophosphate, diphenyl bromophosphate, dimethyl chlorophosphate, phenyl chlorophosphate, trimethyl phosphate, triethyl phosphate, tri-n-butyl phosphate, tridecyl phosphate, triphenyl phosphate, isopropyl triphenyl phosphate, isodecyl diphenyl phosphate and methylene diphenyl phosphate.

Then, examples of the metal constituting the phosphoric acid ester complex compound include aluminum, sodium, lithium, calcium, magnesium and barium. These may be used singly in one kind or in a combination of two or more kinds. Among these, aromatic phosphoric acid esters are preferable; cyclic aromatic phosphoric acid esters are still more preferable; and sodium complex compounds of aromatic cyclic phosphoric acid esters are most preferable.

Among the above-mentioned compounds (B), examples of compounds having a melting point of 300°C or higher include 2,2'-methylenebis(4,6-di-t-butylphenyl) sodium phosphate.

The content of the compound (B) is, with respect to the fluororesin (A), preferably 20 parts by mass or lower, more preferably 10 parts by mass or lower, still more preferably 5 parts by mass or lower, further still more preferably 2 parts by mass or lower and especially preferably 1.5 parts by mass or lower.

The content of the compound (B) is, with respect to the fluororesin (A), preferably 0.001 part by mass or higher and more preferably 0.01 part by mass or higher.

When the content of the compound (B) is too low, it becomes difficult for a covering material to be obtained to be provided with fine cells; and when too high, there arises such a risk that sparks are often generated.

Alternatively, the foam molding composition of the present disclosure may further contain a boron nitride in the range of not impairing the advantageous effects of the present disclosure.

The average particle size of the boron nitride is preferably 8.0 μm or larger. Conventionally, the average particle size of boron nitride is likely to be made small and use of boron nitride having a relatively large average particle size has not been studied specifically.

Due to that the foam molding composition of the present disclosure contains boron nitride having an average particle size in the above specific range, there can be formed a foamed electric wire equipped with a covering material having a smaller average cell size and a high foaming ratio.

The average particle size of the boron nitride is more preferably 9.0 μm or larger, still more preferably 10.0 μm or larger, further still more preferably 10.5 μm or larger, especially preferably 11.0 μm or larger, especially more preferably 12.0 μm or larger and most preferably 13.0 μm or larger.

When the average particle size of the boron nitride is too large, there arise such a risk that the average cell size becomes large and such a risk that sparks are often generated. The average particle size of the boron nitride is preferably 25 μm or smaller and more preferably 20 μm or smaller.

Due to that the average particle size of the boron nitride is in the above range, a covering material having fine and uniform cells can be formed.

The average particle size of the boron nitride is a value determined by using a laser diffraction/scattering particle size distribution analyzer. In the case of using a wet method, a medium may appropriately be selected, but for example, methanol or the like may be used.

The particle size distribution in terms of (D84-D16)/D50 of the boron nitride is preferably 1.2 or lower.

With regard to the particle size distribution, when a cumulative curve is determined with the total volume of a powder mass of the boron nitride being taken to be 100%, D84, D50 and D16 represent, respectively, a particle size (μm) of a point of the cumulative curve which indicates 84%, a particle size (μm) of a point thereof which indicates 50% and a particle size (μm) of a point thereof which indicates 16%. Here, the cumulation of the particle size distribution is carried out from the small particle size side. The total volume of the powder mass can be obtained by preparing a sample

in which the powder of the boron nitride is dispersed in a medium such as methanol, and using a laser diffraction/scattering particle size distribution analyzer (for example, Microtrack MT3300, manufactured by Nikkiso Co., Ltd.).

Due to that the particle size distribution of the boron nitride is in the above range, a covering material having fine and uniform cells can be formed and generation of sparks can be suppressed more.

The particle size distribution is more preferably 1.1 or less and still more preferably 1.0 or lower. The lower limit of the particle size distribution is not limited, but may be, for example, 0.1.

The cumulative curve of the particle size distribution (volumetric particle size distribution) is obtained by using a laser diffraction/scattering particle size distribution analyzer (for example, Microtrack MT3300, manufactured by Nikkiso Co., Ltd.). In the case of using a wet method, a medium may appropriately be selected, but for example, methanol or the like may be used.

It is preferable that the boron nitride is a pulverized one. When the boron nitride is a pulverized one, generation of sparks can be suppressed more.

The pulverization can be carried out by a method and condition by which the average particle size and the particle size distribution of the boron nitride can be made to be in the above ranges. The pulverization is carried out by appropriately selecting the kind and the condition of a pulverizer. The pulverizer may be, for example, a jet mill, a hammer mill, a ball mill, a pin mill or the like.

The boron nitride may be regulated to the average particle size or the particle size distribution in the above range by being classified.

The composition of the present disclosure is not limited, but the content of the boron nitride is preferably 0.1 to 10% by mass, more preferably 0.1 to 2.0% by mass, still more preferably 0.1 to 1.5% by mass and further still more preferably 0.1 to 1.0% by mass. When the content of the boron nitride is too low, there arises such a risk that it becomes difficult for a covering material of a foamed electric wire to be obtained to be provided with fine cells; when too high, there arises such a risk that the production cost becomes high.

Alternatively, the foam molding composition of the present disclosure may further contain a polyatomic anion-containing inorganic salt in the range of not impairing the advantageous effects of the present disclosure.

The polyatomic anion-containing inorganic salt includes one disclosed in U.S. Patent No. 4,764,538.

Alternatively, the foam molding composition of the present disclosure may further contain sulfonic acid, phosphonic acid or salts thereof, zeolite and the like in the range of not impairing the advantageous effects of the present disclosure. Further alternatively, there may be used concurrently an organic foam nucleating agent such as ADCA (azodicarbonamide), DPN (N,N'-dinitropentamethylenetetramine) or OBSH (4,4'-oxybisbenzenesulfonylhydrazide).

Alternatively, the foam molding composition of the present disclosure may further contain, other than the fluororesin (A) and the compound (B), conventionally well-known fillers in the range of not impairing the advantageous effects of the present disclosure.

Examples of the fillers include graphite, carbon fiber, coke, silica, zinc oxide, magnesium oxide, magnesium sulfate, tin oxide, antimony oxide, calcium carbonate, magnesium carbonate, magnesium hydroxide, glass, talc, mica, aluminum nitride, calcium phosphate, sericite, diatomaceous earth, silicon nitride, fine silica, fumed silica, alumina, zirconia, quartz powder, kaolin, bentonite and titanium oxide. The shape of the filler is not limited, and includes fibrous, needle, columnar, whisker, flat plate, lamellar, flake, balloon, porous, chopped fiber, powdery, granular bead shapes and the like. Here, the fillers are different from the boron nitride.

Alternatively, the foam molding composition of the present disclosure may further contain a thermoplastic resin other than the above fluororesin. Examples of the thermoplastic resin other than the fluororesin include general-purpose resins such as polyethylene resins, polypropylene resins, vinyl chloride resins and polystyrene resins; and engineering plastics such as nylon, polycarbonate, polyether ether ketone resins, polyphenylene sulfide resins, polyaryl ether ketone (PAEK), polyether ketone ketone (PEKK), polyether ketone (PEK), polyether ether ketone ketone (PEEKK), polyether sulfone (PES), liquid crystal polymers (LCP), polysulfone (PSF), amorphous polyarylate (PAR), polyether nitrile (PEN), thermoplastic polyimide (TPI), polyimide (PI), polyether imide (PEI), polyamideimide (PAI).

Alternatively, the foam molding composition of the present disclosure may further contain other components of additives and the like. Examples of the other components include fillers such as glass fiber, glass powder, asbestos fiber, cellulose fiber and carbon fiber, and reinforcing agents, stabilizers, lubricants, pigments, flame retarders and other additives.

The foam molding composition of the present disclosure can also be obtained, for example, by a production method (hereinafter, referred to as "production method of the composition") including a mixing step of mixing the fluororesin (A) and the compound (B) and as required, a boron nitride, fillers, additives and the like to be added to thereby obtain a mixture.

A method of the mixing can use a conventionally well-known method or the like, but a mixing method in which the compound (B) is hardly aggregated is preferable.

The mixing method includes methods using a Henschel mixer, a ribbon mixer, a V blender, a ball mill or the like. The method also includes, for example, a method of mixing by melt kneading.

Alternatively, a production method of the foam molding composition of the present disclosure may be a method including a kneading step of kneading the mixture obtained in the above mixing step. By the kneading, pellets can be obtained. The kneading can be carried out, for example, by a method using a conventionally well-known melt kneader such as a single-screw extruder or a twin-screw extruder.

Alternatively, a production method of the foam molding composition may be a method including a step of subjecting a fluororesin to a fluorination treatment. The fluorination treatment can use the above-mentioned method. The fluorination treatment may be carried out, for example, by bringing pellets obtained in the above kneading into contact with the above-mentioned fluorine-containing compound.

Each component of the thermoplastic resin other than the fluororesin; the boron nitride; the polyatomic anion-containing inorganic salt; the fillers; the other additives; and the like as already described as being capable of being contained in the foam molding composition of the present disclosure, can appropriately be added in each step of the production method of the foam molding composition according to the property and the like of the each component. Alternatively, a fluororesin and a boron nitride may further be added.

The foam molding composition of the present disclosure can suitably be used as a foaming composition. Further, the foam molding composition can suitably be used as a composition for electric wire covering to form a covering material of an electric wire.

The foam molding composition of the present disclosure exhibits good foamability without using any fluorine-based surfactant. As conventional fluorine-based surfactants, fluorine-based low-molecular weight compounds have been used generally. When a resin contains much of such a fluorine-containing low-molecular weight compound, the resin in a melted state in molding is plasticized, posing such a problem that many sparks are generated. The foam molding composition of the present disclosure, since being substantially free from such a fluorine-based low-molecular weight compound, poses no above-mentioned problem, and can provide the foam molded body excellent in the surface condition.

The fluorine-based low-molecular weight compound is not limited, and examples thereof include perfluoroalkyl acids and perfluorosulfonic acids, and specifically include $C_8F_{17}COOH$ and salts thereof, $C_7F_{15}COOH$ and salts thereof, $C_6F_{13}COOH$ and salts thereof, $C_8F_{17}SO_3H$ and salts thereof, $C_6F_{13}SO_3H$ and salts thereof, $C_4F_9SO_3H$ and salts thereof, $C_8F_{17}CH_2CH_2\text{-}SO_3H$ and salts thereof, $C_6F_{13}CH_2CH_2\text{-}SO_3H$ and salts thereof, $C_8F_{17}CH_2CH_2OH$ and $C_6F_{13}CH_2CH_2OH$, and more specifically include $\{F(CF_2)_6CH_2CH_2SO_3\}_2Ba$.

The content of the fluorine-based low-molecular weight compound can be analyzed by the following method: Pellets of the foam molding composition are ground by freezing grinding; and the fabricated powder is dispersed in methanol and subjected to extraction with ultrasonication at 60°C for 2 hours. The extract is quantitatively determined by a liquid chromatograph-mass spectrometer (LC-MS/MS) and the quantitatively determined value is taken as the content.

A method for producing a foam molded body of the present disclosure comprises a step of foam molding the foam molding composition.

The method of foam molding the foam molding composition is not limited, and for example, a conventionally well-known method can be used; examples thereof include a method using a continuous gas injection method in which a gas is used in the fluororesin melted (melted resin) and the foam molding composition of the present disclosure is charged in a screw extruder designed for foaming operation.

The gas may be, for example, a gas such as chlorodifluoromethane, nitrogen or carbon dioxide, or a mixture thereof; the gas may be introduced as a pressurized gas in the melted resin in the extruder, or may be generated by mixing a chemical foaming agent in the melted resin. The gas is dissolved in the melted resin in the extruder.

The gas dissolved in the melted resin comes out from the melted material by sudden decline of the pressure of the melted material when the melted material comes out from an extrusion die. The extrudate extruded from the extruder is then cooled and solidified, for example, by a method in which the extrudate is introduced in water.

The foam molded body, since being obtained by foam molding the foam molding composition, is low in the dielectric constant, presents a stable capacitance and is low in the weight, and can provide the shape stable in the size including the wire diameter, the thickness and the like as a covering material described later.

The total volume of cells in the foam molded body can appropriately be regulated according to applications, for example, by regulation of the amount of the gas to be introduced in the extruder, and the like, or by selection of the kind of the gas to be dissolved.

The foam molded body is obtained as a molded body molded according to applications in extrusion from the extruder. The molding method is not limited as long as being thermal melt molding, and examples thereof include extrusion foam molding, injection foam molding and metal mold foam molding.

The shape of the foam molded body is not limited, and can be made into various shapes such as a covering material of the foamed electric wire, filament shapes such as a wire rod or the like, sheet, film, rod and pipe shapes. The foam molded body can be used, for example, as an electric insulating material, a heat insulating material, a sound insulating material, a lightweight structural material such as a floating material, a cushioning material such as a cushion,

and the like. Further, the foam molded body can especially suitably be used as a covering material of the foamed electric wire.

The foam molded body to be obtained contains a melted and solidified body of the foam molding composition of the present disclosure and cells, and it is preferable that the cells are homogeneously distributed in the melted and solidified body. The average cell size of the cells is not limited, but is, for example, preferably 60 μm or smaller, and is preferably 0.1 μm or larger.

The foaming ratio of the foam molded body is not limited, but is preferably 20% or higher. The upper limit of the foaming ratio is not limited, but is, for example, 80%.

Also the point that the surface of the foam molded body of the present disclosure is smoother than that of conventional foam molded bodies containing a fluororesin is one of features of the foam molded body. Due to that the surface is smooth, the foam molded body can suitably be utilized for twin-ax cables and the like.

In the present disclosure, the surface of the foam molded body can be evaluated by scanning the surface by a bare hand and observing the degree of catching (protrusions) transmitted to the hand at this time. The electric wire surface can also be evaluated numerically, as described later, by measuring an electric wire surface by a laser microscope, carrying out correction in a specified electric wire region of obtained image data by using quadratic curved surface correction as surface shape correction, and thereafter calculating the surface roughness of 500 × 2,000 μm. The surface roughness is preferably smaller than 10.0 μm and more preferably smaller than 7.0 μm. The lower limit of the surface roughness may be 0.001 μm or larger.

A method for producing an electric wire of the present disclosure includes a step of covering a core wire with the foam molding composition to thereby obtain the electric wire. By using the foam molding composition, there can be formed a foamed electric wire equipped with a covering material having fine and uniform cells. It is preferable that the step of obtaining the electric wire involves foam molding the foam molding composition.

The electric wire obtained by the production method of the electric wire is composed of the covering material formed from the foam molding composition and the core wire. The electric wire obtained by covering the core wire with the foam molding composition is also one aspect in the present disclosure.

The covering material, since being obtained by covering the core wire with the foam molding composition, has fine and uniform cells. The covering material is low in the dielectric constant, presents a stable capacitance and is low in the weight, and can provide the shape stable in the size including the wire diameter, the thickness and the like.

Further, the covering material has the smooth surface as in the above foam molded body, and exhibits similar physical properties.

The electric wire can be fabricated by a conventionally similar method, except for covering the core wire with the above-mentioned foam molding composition, and can be produced, for example, by using extrusion foam molding. The preferable extrusion condition can appropriately be selected according to the formulation of the composition to be used and the size of the electric wire to be used.

Examples of a method of covering the core wire with the foam molding composition include a method in which the foam molding composition of the present disclosure is charged in a screw extruder designed for foaming operation, while a gas soluble to the fluororesin melted (melted resin) is used and a continuous gas injection method is used. The gas may be the same gas as the gas to be used in the production method of the foam molded body.

The obtained covering material contains a melted and solidified body of the foam molding composition of the present disclosure and cells, and it is preferable that the cells are distributed homogeneously in the melted and solidified body.

The average cell size of the cells is not limited, but is, for example, preferably 200 μm or smaller, more preferably 100 μm or smaller, still more preferably 50 μm or smaller, further still more preferably 40 μm or smaller, especially preferably 30 μm or smaller and further especially preferably 20 μm or smaller. The average cell size is preferably 0.1 μm or larger, more preferably 0.5 μm or larger and more preferably 1 μm or larger.

Such a structure of the covering material is obtained due to a combination of the fluororesin (A) and a specific compound (B) in the foam molding composition of the present disclosure.

The average cell size is a value determined by taking an image of a covering material cross section by a scanning electron microscope (SEM), calculating the diameter of each cell by image processing and averaging the diameters.

The foaming ratio of the covering material is preferably 20% or higher, more preferably 30% or higher, still more preferably 40% or higher and further still more preferably 43% or higher. The upper limit is not limited, but is, for example, 90%. Alternatively, the upper limit of the foaming ratio may be 80%.

The foaming ratio is a value determined as ((a specific gravity of a fluororesin - a specific gravity of a foam)/the specific gravity of the fluororesin) × 100. The foaming ratio can appropriately be regulated according to applications, for example, by regulation of the amount of the gas to be introduced in the extruder, and the like, or by selection of the kind of the gas to be dissolved.

The number of sparks per 3,500 m of the covering material is preferably less than 5, more preferably less than

3 and still more preferably less than 1.

The number of sparks is a value obtained by measurement at a voltage of 1,500 V by a Beta LaserMike Sparktester HFS1220.

A material of the core wire may be, for example, a metal conductor material such as copper or aluminum, carbon, or the like. The material may be a single material, or may be a material plated with silver, tin or the like.

It is preferable that the core wire is one having a diameter of 0.02 to 3 mm. The diameter of the core wire is more preferably 0.04 mm or larger, still more preferably 0.05 mm or larger and especially preferably 0.1 mm or larger. It is more preferable that the diameter of the core wire is 2 mm or smaller. The core wire may be a solid wire, or may also be a twisted wire in which a plurality of core wires are twisted.

The shape of the core wire is not limited, and includes flat shapes and rectangular shapes.

It is preferable that the electric wire has a thickness of the covering material of 0.01 to 3.0 mm. It is also preferable that the thickness of the covering material is 2.0 mm or smaller.

Specific examples of the core wire may be AWG (American wire gauge)-46 (solid copper wire having a diameter of 40 micrometer), AWG-42 (solid copper wire having a diameter of 64 micrometer), AWG-36 (solid copper wire having a diameter of 127 micrometer or wire having a total size of 153 micrometer in diameter of 7 stranded copper wires having a diameter of 51 micrometer), AWG-30 (solid copper wire having a diameter of 254 micrometer or wire having a total size of 306 micrometer in diameter of 7 stranded copper wires having a diameter of 102 micrometer), AWG-27 (solid copper wire having a diameter of 361 micrometer), AWG-26 (solid copper wire having a diameter of 404 micrometer), AWG-24 (solid copper wire having a diameter of 510 micrometer), or AWG-22 (solid copper wire having a diameter of 635 micrometer).

The foamed electric wire is composed of the core wire and the covering material covering the core wire. The foamed electric wire can be used as cables which connect computers and their peripheral equipment, cables which communicate high capacities of images and sounds at high speed, cables which connect between servers of data centers, for example, LAN cables, USB cables, lightning cables, Thunderbolt cables, cables for CATV, HDMI(R) cables and QSFP cables, electric wires for aerospace, underground transmission cables, submarine power cables, high-tension cables, superconducting cables, wrapping electric wires, electric wires for cars, wire harnesses and electrical wiring, electric wires for robots and FA, electric wires for OA equipment, electric wires for information devices (optical fiber cables, audio cables and the like), internal wiring for communication base stations, large-current internal wiring (inverters, power conditioners, battery systems, and the like), internal wiring for electronic devices, wiring for small electronic devices and mobile devices, wiring for moving parts, internal wiring for electric devices, internal wiring for measurement apparatuses, power cables (for construction, wind/solar power generation, and the like), cables for control and instrumentation wiring, cables for motors, and the like.

The electric wire may also have a two-layer structure (skin-foam) in which a non-foamed layer is inserted between the core wire and the covering material, a two-layer structure (foam-skin) in which a non-foamed layer is coated as an outer layer, or a three-layer structure (skin-foam-skin) in which a non-foamed layer is coated as an outer layer of the skin-foam.

The non-foamed layer of the electric wire is not limited, and may be a resin layer composed of a resin such as a TFE/HFP-based copolymer, a TFE/PAVE copolymer, a TFE/ethylene-based copolymer, a vinylidene fluoride-based polymer, a polyolefin resin such as polyethylene [PE] or polyvinyl chloride [PVC].

Since the foam molding composition of the present disclosure is substantially free from fluorine-based low-molecular weight compound, the above-mentioned foam molded body and electric wire also are substantially free from fluorine-based low-molecular weight compound.

The content of the fluorine-based low-molecular weight compound in the foam molded body and the electric wire can also be analyzed as in the above-mentioned case of the foam molding composition.

The present disclosure is also foamed electric wires cited below.

(1) A foamed electric wire characterized in having a core wire and a fluororesin layer or a fluororesin composition layer covering the core wire, wherein the fluororesin layer or the fluororesin composition layer contains cells, wherein the average aspect ratio of the cells is 1.9 or lower, in observation of a cut surface parallel to the lengthwise direction of the foamed electric wire.

(2) A foamed electric wire characterized in having a core wire and a fluororesin layer or a fluororesin composition layer covering the core wire, wherein the fluororesin layer or the fluororesin composition layer contains cells, wherein the presence proportion of cells having an aspect ratio of 3 or higher is 13% or lower with respect to the total amount of cells measured in observation of the cut surface parallel to the lengthwise direction of the foamed electric wire, in observation of a cut surface parallel to the lengthwise direction of the foamed electric wire.

(3) A foamed electric wire characterized in having a core wire and a fluororesin layer or a fluororesin composition layer covering the core wire, wherein the fluororesin layer or the fluororesin composition layer contains cells, wherein the standard deviation of the aspect ratios of the cells is 1.3 or lower, in observation of a cut surface parallel to the

lengthwise direction of the foamed electric wire.

(4) A foamed electric wire characterized in having a core wire and a fluororesin layer or a fluororesin composition layer covering the core wire, wherein the fluororesin layer or the fluororesin composition layer contains cells, wherein the foaming ratio is 35% or higher and the surface roughness is 9.0 μm or smaller.

The cells contained in the fluororesin layer or the fluororesin composition layer satisfying these physical properties indicates that these layers contain fine and uniform cells and it can be said that the dielectric constant is low and a stable capacitance is presented.

These fluororesin layer and fluororesin composition layer can be formed, for example, from the foam molding composition of the present disclosure.

The average aspect ratio of the cells is 1.9 or lower. The average aspect ratio can be measured by taking an image of a cut surface parallel to the lengthwise direction of the covering material by a scanning electron microscope (SEM), determining an aspect ratio of each cell by calculating the ratio of the major axis to the minor axis (major axis/minor axis) from the major axis and the minor axis of each cell obtained by image processing, and averaging the determined aspect ratios. The average aspect ratio is preferably 1.8 or lower and more preferably 1.6 or lower. Then, it is preferable that the average aspect ratio is 1.0 or higher.

The presence proportion of cells having an aspect ratio of 3 or higher is 13% or lower with respect to the total amount of cells measured in observation of a cut surface parallel to the lengthwise direction. The presence proportion is obtained by calculating the proportion of cells having an aspect ratio of 3 or higher determined by taking an image of a cut surface parallel to the lengthwise direction of the covering material by a scanning electron microscope (SEM), and calculating the ratio of the major axis to the minor axis (major axis/minor axis) from the major axis and the minor axis of each cell obtained by image processing.

The presence proportion of cells having an aspect ratio of 3 or higher is preferably 6% or lower and more preferably 3% or lower. Then, it is preferable that the proportion is 0.01% or higher.

The standard deviation of the aspect ratios of the cells is 1.3 or lower. The standard deviation is calculated as a standard deviation of the aspect ratios determined by taking an image of a cut surface parallel to the lengthwise direction of the covering material by a scanning electron microscope (SEM), and calculating the ratio of the major axis to the minor axis (major axis/minor axis) from the major axis and the minor axis of the each cell obtained by image processing. The standard deviation of the aspect ratios is preferably 1.1 or lower, more preferably 0.8 or lower and more preferably 0.6 or lower. Then, it is preferable that the standard deviation is 0.01 or higher.

The foaming ratio is 35% or higher. The foaming ratio is a value determined as ((a specific gravity of the fluororesin - a specific gravity of the fluororesin layer or fluororesin composition layer)/the specific gravity of the fluororesin) $\times$ 100.

The foaming ratio is preferably 40% or higher and more preferably 43% or higher.

The surface roughness is 9.0 μm or smaller. The surface roughness is a value obtained by measuring an electric wire surface by a laser microscope, manufactured by Keyence Corp., carrying out correction in a specified electric wire region of obtained image data by using quadratic curved surface correction as surface shape correction, and thereafter, calculating the surface roughness of 500 $\times$ 200 μm.

The surface roughness is more preferably 8.0 μm or smaller and still more preferably 7.0 μm or smaller.

In the above-mentioned foamed electric wire, it is preferable that in observation of a cut surface perpendicular to the lengthwise direction, the average cell size of the cells is 40 μm or smaller. The average cell size is a value determined by taking an image of a covering material cross section by a scanning electron microscope (SEM), calculating the diameter of each cell by image processing and averaging the diameters. The average cell size is preferably 30 μm or smaller, more preferably 25 μm or smaller and especially preferably 20 μm or smaller. Then, it is preferable that the average cell size is 0.1 μm or larger.

In the above-mentioned foamed electric wire, the covering thickness of the fluororesin layer or the fluororesin composition layer is preferably 0.4 mm or smaller, more preferably 0.3 mm or smaller and still more preferably 0.25 mm or smaller. The covering thickness is a value determined as (an outer diameter of an electric wire covering - a diameter of a core wire)/2.

In the above-mentioned foamed electric wire, the core wire diameter is preferably 0.5 mm or smaller, more preferably 0.4 mm or smaller and more preferably 0.3 mm or smaller.

A method for producing the above-mentioned foamed electric wire is not limited, but it is preferable that the foamed electric wire is produce by a method using the above-mentioned foam molding composition of the present disclosure. That is, the use of the foam molding composition of the present disclosure enables the foamed electric wire having the above-mentioned performance to be obtained, and thereby, various performance features can be provided.

The above-mentioned method for producing the foamed electric wire of the present disclosure can be carried out by the step as described above.

## Examples

Hereinafter, the present disclosure will be described specifically based on Examples.

### Production Example 1 Preparation of pellets A

Pellets A were obtained by the same method as the method described in Example 1 of Japanese Patent Laid-Open No. 2017-128119. The formulation of the obtained pellets was a TFE/HFP/PPVE copolymer in which TFE/HFP/PPVE = 87.8/11.2/1.0 (in mass ratio); the melting point was 255°C; the melt flow rate (MFR) was 37 g/10 min; and the total number of unstable terminal groups and a $-CF_2H$ terminal group was 0 per $1 \times 10^6$ carbon atoms.

### Production Example 2 Preparation of pellets B

Pellets (B) were prepared by the same method as in Production Example 1, except for altering the amount of ammonium persulfate charged for regulation of the molecular weight. The formulation of the obtained pellets was a TFE/HFP/PPVE copolymer in which TFE/HFP/PPVE = 87.8/11.2/1.0 (in mass ratio); the melting point was 255°C; the melt flow rate (MFR) was 30 g/10 min; and the total number of unstable terminal groups and a $-CF_2H$ terminal group was 10 per $1 \times 10^6$ carbon atoms.

### Production Example 3 Preparation of pellets C

Pellets C were obtained by subjecting, to a fluorination treatment, pellets produced by the same method as in Synthesis Example 1 of WO2005-052015. The formulation of the obtained pellets was a TFE/PPVE copolymer in which TFE/PPVE = 94.9/5.1 (in mass ratio); the melting point was 255°C; the melt flow rate (MFR) was 63 g/10 min; and the total number of unstable terminal groups and a $-CF_2H$ terminal group was 0 per $1 \times 10^6$ carbon atoms.

Molding of a foamed electric wire was carried out by setting pellets (composition) prepared by melt kneading so as the amount to be added be a predetermined value to an extruder temperature, being a temperature shown in Table 1, using a copper wire of $\phi$0.30 mm as a core wire, and adjusting the extrusion temperature, the flow volume (pressure) of a nitrogen gas to be introduced, the extrusion speed and the take-over speed so that the outer diameter after covering became 0.80 mm and the electrostatic capacity became 0.86 pF/m (corresponding to a foaming ratio of 430). The electric wire extrusion condition is shown in Table 2.

The molding was carried out continuously for 1 hour, and for 3,500 m minutes where the molding remained stable, fluctuation in the wire diameter, fluctuation in the capacitance, and sparking-out were observed. Further, for the obtained foamed electric wire, the foaming ratio and the average cell size were measured, and the surface condition was observed and the surface roughness was measured, by the following methods.

For the obtained electric wires, the results of evaluations of each characteristic are shown in Tables 3 and 4.

Additives in Tables 3 and 4 were as follows.

NA11: 2,2'-methylenebis(4,6-di-t-butylphenyl) sodium phosphate BN: boron nitride
C4SBa salt: $(C_4F_9SO_3)_2Ba$
C4SNa salt: $C_4F_9SO_3Na$
C8SBa salt: $\{F(CF_2)_6CH_2CH_2SO_3\}_2Ba$
CaTB: $CaB_4O_7$

[Table 1]

| | |
|---|---|
| C1 | 280~340°C |
| C2 | 320~380C |
| C3 | 340~400°C |
| C4 | 340~400°C |
| C5 | 340~400°C |
| H1 | 340~400°C |
| H2 | 330~400°C |
| H3 | 300~400°C |

[Table 2]

| | |
|---|---|
| Extruder size | Φ35 mm |
| Die size | 2.0-2.5 mm |
| Tip size | 1.0 mm |
| Screw rotation speed | 10-20 rpm |
| Core wire (mm) | 0.30 mm |
| Nitrogen pressure (MPa) | 15-30 MPa |
| Nitrogen flow volume (cc/min) | 10-30 cc/min |

Various properties in the present description were measured by the following methods.

(Measurement of the number of unstable terminal groups)

Pellets were rolled by a hydraulic press to fabricate a film having a thickness of approximately 0.3 mm, and the film was analyzed by an FT-IR Spectrophotometer 1760X (manufactured by PerkinElmer, Inc.).

There was acquired a difference spectrum between the film and a reference sample (sample fluorinated so fully that any difference was substantially no longer observed in the spectrum) and the absorbance of each peak was read and the number of unstable terminal groups per $1 \times 10^6$ carbon atoms was calculated according to the following expression.

$$\text{The number of an unstable terminal group per } 1 \times 10^6 \text{ carbon atoms} = (I \times K)/t$$

wherein I: absorbance, K: correction factor, t: film thickness (unit: mm) .

The correction factor (K) of each unstable terminal group was as follows.

-COF (1,884 $cm^{-1}$) ... 405
-COOH (1,813 $cm^{-1}$, 1,775 $cm^{-1}$) ··· 455
-$COOCH_3$ (1,795 $cm^{-1}$) ··· 355
-$CONH_2$ (3,438 $cm^{-1}$) ··· 480
-$CH_2OH$ (3,648 $cm^{-1}$) ··· 2,325

(Measurement of the number of a -$CF_2H$ terminal group)

A $^{19}F$-NMR measurement was carried out by using a nuclear magnetic resonance instrument AC300 (manufactured by Bruker Biospin GmbH) at a measurement temperature of (the melting point of a fluororesin + 20)°C, and the number thereof was determined from an integrated value of a peak derived from the presence of the -$CF_2H$ group and integrated values of other peaks.

(Melting point)

The melting point of a fluororesin was defined as a temperature corresponding to a peak when the measurement was carried out at a temperature-increasing rate of 10°C/min by using an RDC220 (manufactured by Seiko Instruments Inc.).

(MFR)

The MFR of a fluororesin was measured according to ASTM D1238 by using a KAYENESS Melt Indexer Series 4000 (manufactured by Yasuda Seiki Seisakusho, Ltd.) and by using a die of 2.1 mm in diameter and 8 mm in length, the MFR was defined as a value by the measurement at 372°C and at a load of 5 kg.

(Outer diameter)

The outer diameter of an electric wire was measured by using a LASER MICRO DIAMETER LDM-303H-XY (manufactured by Takikawa Engineering Co., Ltd.).

(Electrostatic capacity)

The capacitance was measured by using a CAPAC300 19C (manufactured by Zumbach Electronic AG).

(The number of sparks)

The number of sparks per 3,500 m was measured by using a Beta LaserMike Sparktester HFS1220 at a voltage of 1,500 V.

(Foaming ratio)

The foaming ratio was determined as ((a specific gravity of a fluororesin - a specific gravity of a foam)/the specific gravity of the fluororesin) × 100.

(Average cell size)

The average cell size was determined by taking a SEM image of an electric wire cross section, calculating the diameter of each cell by image processing, and averaging the diameters.

(Surface condition)

The surface condition was evaluated by scanning the surface of a covered electric wire by a bare hand and evaluating the degree of catching (protrusions) transmitted to the hand at this time.

Very good: there was no catching
Good: there was a little catching
Bad: there was considerable catching

(Surface roughness)

The electric wire surface was measured by a laser microscope, manufactured by Keyence Corp.; there was carried out correction in a specified electric wire region of obtained image data by using quadratic curved surface correction as surface shape correction; and thereafter, the surface roughness of 500 × 2,000 μm was calculated.

Example 1

Pellets in which 0.5 part by mass of 2,2'-methylenebis(4,6-di-t-butyphenyl) sodium phosphate (crystal nucleating agent, ADK STAB NA-11, melting point: ≥400°C, manufactured by Adeka Corp.) was added to the pellets (A) were subjected to foamed electric wire molding at an extrusion speed of 15 rpm, at a flow volume of a nitrogen gas introduced of 18 cc/min and at a take-over speed of 102 m/min to thereby obtain a targeted foamed electric wire having an outer diameter of 0.80 mm and electrostatic capacity of 86.6 pF/m. The standard deviation of the variation in the wire diameter gave a good value of 0.003 and the standard deviation of the variation in the electrostatic capacity gave a good value of 0.3, and the number of sparks gave a very good value of 2. As a result of analysis of the obtained foamed electric wire, the foaming ratio gave a good value of 43% and the average cell size gave a good value of 17 μm; the surface condition was extremely good to touch and the surface roughness gave a very good value of 6.6 μm. Further, from the pellets used and the foamed electric wire fabricated, no fluorine-based low-molecular weight compound was detected.

A cross-sectional photograph of the electric wire obtained in Example 1 is shown in FIG. 1.

Further, a photograph of the surface condition is shown in FIG. 12.

Example 2

Pellets in which 1.0 part by mass of 2,2'-methylenebis(4,6-di-t-butyphenyl) sodium phosphate (crystal nucleating agent, ADK STAB NA-11, manufactured by Adeka Corp.) was added to the pellets (A) were subjected to foamed electric

wire molding at an extrusion speed of 15 rpm, at a flow volume of a nitrogen gas introduced of 16 cc/min and at a take-over speed of 100 m/min to thereby obtain a targeted foamed electric wire having an outer diameter of 0.80 mm and electrostatic capacity of 86.1 pF/m. The standard deviation of the variation in the wire diameter gave a good value of 0.003 and the standard deviation of the variation in the electrostatic capacity gave a good value of 0.2, and the number of sparks gave a very good value of 3. As a result of analysis of the obtained foamed electric wire, the foaming ratio gave a good value of 43% and the average cell size gave a good value of 14 μm; the surface condition was extremely good to touch and the surface roughness gave a very good value of 6.9 μm.

A cross-sectional photograph of the electric wire obtained in Example 2 is shown in FIG. 2.

Further, a photograph of the surface condition is shown in FIG. 13.

Example 3

Pellets in which 0.5 part by mass of 2,2'-methylenebis(4,6-di-t-butyphenyl) sodium phosphate (crystal nucleating agent, ADK STAB NA-11, manufactured by Adeka Corp.) and 1.0 part by mass of PFA were added to the pellets (A) were subjected to foamed electric wire molding at an extrusion speed of 15 rpm, at a flow volume of a nitrogen gas introduced of 18 cc/min and at a take-over speed of 104 m/min to thereby obtain a targeted foamed electric wire having an outer diameter of 0.80 mm and electrostatic capacity of 86.5 pF/m. The standard deviation of the variation in the wire diameter gave a good value of 0.003 and the standard deviation of the variation in the electrostatic capacity gave a good value of 0.3, and the number of sparks gave a very good value of 2. As a result of analysis of the obtained foamed electric wire, the foaming ratio gave a good value of 43% and the average cell size gave a good value of 18 μm; the surface condition was extremely good to touch and the surface roughness gave a very good value of 6.8 μm.

A cross-sectional photograph of the electric wire obtained in Example 3 is shown in FIG. 3.

Further, a photograph of the surface condition is shown in FIG. 14.

Example 4

Pellets in which 0.5 part by mass of 2,2'-methylenebis(4,6-di-t-butyphenyl) sodium phosphate (crystal nucleating agent, ADK STAB NA-11, melting point: ≥400°C, manufactured by Adeka Corp.) was added to the pellets (C) were subjected to foamed electric wire molding at an extrusion speed of 15 rpm, at a flow volume of a nitrogen gas introduced of 18 cc/min and at a take-over speed of 102 m/min to thereby obtain a targeted foamed electric wire having an outer diameter of 0.80 mm and electrostatic capacity of 86.3 pF/m. The standard deviation of the variation in the wire diameter gave a good value of 0.004 and the standard deviation of the variation in the electrostatic capacity gave a good value of 0.3, and the number of sparks gave a very good value of 1. As a result of analysis of the obtained foamed electric wire, the foaming ratio gave a good value of 43% and the average cell size gave a good value of 19 μm; the surface condition was extremely good to touch and the surface roughness gave a very good value of 6.8 μm.

A cross-sectional photograph of the electric wire obtained in Example 4 is shown in FIG. 4.

Further, a photograph of the surface condition is shown in FIG. 15.

Comparative Example 1

Pellets in which nothing was added to the pellets (A) were subjected to foamed electric wire molding at an extrusion speed of 15 rpm, at a flow volume of a nitrogen gas introduced of 21 cc/min and at a take-over speed of 70 m/min. Almost no foaming was observed; the variation in the outer diameter; and the variation in the electrostatic capacity was very large. No targeted foamed electric wire could be obtained.

Comparative Example 2

Pellets in which 1.0 part by mass of the boron nitride was added to the pellets (A) were subjected to foamed electric wire molding at an extrusion speed of 15 rpm, at a flow volume of a nitrogen gas introduced of 20 cc/min and at a take-over speed of 106 m/min to thereby obtain a targeted foamed electric wire having an outer diameter of 0.80 mm and electrostatic capacity of 86.2 pF/m. The standard deviation of the variation in the wire diameter gave a value of 0.004, the standard deviation of the variation in the electrostatic capacity gave a high value of 1.9; and the number of sparks gave a very bad value of 100 or more. As a result of analysis of the obtained foamed electric wire, the foaming ratio gave a value of 43% and the average cell size gave a large value of 36 μm; the surface condition was poor and the surface roughness gave a bad value of 12.4 μm.

A cross-sectional photograph of the electric wire obtained in Comparative Example 2 is shown in FIG. 5.

Further, a photograph of the surface condition is shown in FIG. 16.

Comparative Example 3

Pellets in which 0.0281 part by mass of a fluorooctanesulfonic acid barium salt, 0.011 part by mass of calcium tetraborate and 0.4 part by mass of the boron nitride were added to the pellets (B) were subjected to foamed electric wire molding at an extrusion speed of 15 rpm, at a flow volume of a nitrogen gas introduced of 13 cc/min and at a take-over speed of 100 m/min to thereby obtain a targeted foamed electric wire having an outer diameter of 0.80 mm and electrostatic capacity 86.4 pF/m. The standard deviation of the variation in the wire diameter gave a value of 0.005 and the standard deviation of the variation in the electrostatic capacity gave a slightly high value of 0.6, and the number of sparks gave a large value of 12. As a result of analysis of the obtained foamed electric wire, the foaming ratio gave a value of 43% and the average cell size gave a good value of 14 μm; the surface condition was good to touch and the surface roughness gave a bad value of 10.0 μm. Further, from the pellets used and the foamed electric wire fabricated, 11 ppm of and 16 ppm of $\{F(CF_2)_6CH_2CH_2SO_3\}_2Ba$ were detected, respectively.

A cross-sectional photograph of the electric wire obtained in Comparative Example 3 is shown in FIG. 6.

Further, a photograph of the surface condition is shown in FIG. 17.

Comparative Example 4

Pellets in which 0.1 part by mass of a fluorooctanesulfonic acid barium salt was added to the pellets (A) were subjected to foamed electric wire molding at an extrusion speed of 15 rpm, at a flow volume of a nitrogen gas introduced of 16 cc/min and at a take-over speed of 90 m/min to thereby obtain a targeted foamed electric wire having an outer diameter of 0.80 mm and electrostatic capacity of 86.5 pF/m. The standard deviation of the variation in the wire diameter gave a value of 0.007 and the standard deviation of the variation in the electrostatic capacity gave a slightly high value of 0.7, and the number of sparks gave a large value of 9. As a result of analysis of the obtained foamed electric wire, the foaming ratio gave a value of 43% and the average cell size gave a good value of 17 μm; the surface condition was good to touch and the surface roughness gave a bad value of 10.9 μm.

A cross-sectional photograph of the electric wire obtained in Comparative Example 4 is shown in FIG. 7.

Further, a photograph of the surface condition is shown in FIG. 18.

Comparative Example 5

Pellets in which 0.08 part by mass of a fluorooctanesulfonic acid barium salt and 0.01 part by mass of calcium tetraborate were added to the pellets (A) were subjected to foamed electric wire molding at an extrusion speed of 15 rpm, at a flow volume of a nitrogen gas introduced of 16 cc/min and at a take-over speed of 90 m/min to thereby obtain a targeted foamed electric wire having an outer diameter of 0.80 mm and electrostatic capacity of 86.5 pF/m. The standard deviation of the variation in the wire diameter gave a value of 0.005 and the standard deviation of the variation in the electrostatic capacity gave a good value of 0.3, but the number of sparks gave a large value of 8. As a result of analysis of the obtained foamed electric wire, the foaming ratio gave a value of 43% and the average cell size gave a good value of 17 μm; the surface condition was good to touch and the surface roughness gave a bad value of 10.4 μm.

A cross-sectional photograph of the electric wire obtained in Comparative Example 5 is shown in FIG. 8.

Further, a photograph of the surface condition is shown in FIG. 19.

Comparative Example 6

Pellets in which 0.01 part by mass of a fluorobutanesulfonic acid sodium salt and 0.4 part by mass of the boron nitride were added to the pellets (A) were subjected to foamed electric wire molding at an extrusion speed of 15 rpm, at a flow volume of a nitrogen gas introduced of 20 cc/min and at a take-over speed of 90 m/min to thereby obtain a targeted foamed electric wire having an outer diameter of 0.80 mm and electrostatic capacity of 86.1 pF/m. The standard deviation of the variation in the wire diameter gave a value of 0.004 and the standard deviation of the variation in the electrostatic capacity gave a good value of 0.4, but the number of sparks gave a large value of 15. As a result of analysis of the obtained foamed electric wire, the foaming ratio gave a value of 43% and the average cell size gave a large value of 30 μm; the surface condition was poor to touch and the surface roughness gave a bad value of 12.3 μm.

A cross-sectional photograph of the electric wire obtained in Comparative Example 6 is shown in FIG. 9.

Further, a photograph of the surface condition is shown in FIG. 20.

Comparative Example 7

Pellets in which 0.1 part by mass of a fluorobutanesulfonic acid sodium salt was added to the pellets (A) were subjected to foamed electric wire molding at an extrusion speed of 15 rpm, at a flow volume of a nitrogen gas introduced

of 20 cc/min and at a take-over speed of 90 m/min to thereby obtain a targeted foamed electric wire having an outer diameter of 0.80 mm and electrostatic capacity of 86.1 pF/m. The standard deviation of the variation in the wire diameter gave a value of 0.004 and the standard deviation of the variation in the electrostatic capacity gave a good value of 0.3, but the number of sparks gave a large value of 8. As a result of analysis of the obtained foamed electric wire, the foaming ratio gave a value of 43% and the average cell size gave a good value of 17 μm; the surface condition was good to touch and the surface roughness gave a bad value of 10.0 μm.

A cross-sectional photograph of the electric wire obtained in Comparative Example 7 is shown in FIG. 10.

Further, a photograph of the surface condition is shown in FIG. 21.

Example 5

Pellets in which 1.0 part by mass of a bisphenol phosphoric acid diester Ba salt (melting point ≥ 400°C) was added to the pellets (A) were subjected to foamed electric wire molding at an extrusion speed of 15 rpm, at a flow volume of a nitrogen gas introduced of 14 cc/min and at a take-over speed of 105 m/min to thereby obtain a targeted foamed electric wire having an outer diameter of 0.80 mm and electrostatic capacity of 86.2 pF/m. The standard deviation of the variation in the wire diameter gave a value of 0.003 and the standard deviation of the variation in the electrostatic capacity gave a good value of 0.3, and the number of sparks gave a very good value of 2. As a result of analysis of the obtained foamed electric wire, the foaming ratio gave a value of 43% and the average cell size gave a good value of 18 μm; the surface condition was extremely good to touch and the surface roughness gave a very good value of 6.7 μm.

A cross-sectional photograph of the electric wire obtained in Example 5 is shown in FIG. 23.

Further, a photograph of the surface condition is shown in FIG. 24.

Example 6

Pellets in which 1.0 part by mass of N,N'-dicyclohexyl-2,6-naphthalenedicarboxamide (crystal nucleating agent, NJSTAR NU-100, melting point: ≥ 400°C, manufactured by New Japan Chemical Co., Ltd.) and 1.0 part by mass of PFA were added to the pellets (A) were subjected to foamed electric wire molding at an extrusion speed of 15 rpm, at a flow volume of a nitrogen gas introduced of 16 cc/min and at a take-over speed of 96 m/min to thereby obtain a targeted foamed electric wire having an outer diameter of 0.80 mm and electrostatic capacity of 86.5 pF/m. The standard deviation of the variation in the wire diameter gave a value of 0.004 and the standard deviation of the variation in the electrostatic capacity gave a good value of 0.3, and the number of sparks gave a very good value of 6. As a result of analysis of the obtained foamed electric wire, the foaming ratio gave a value of 43% and the average cell size gave a good value of 22 μm; the surface condition was extremely good to touch and the surface roughness gave a very good value of 8.0 μm.

A cross-sectional photograph of the electric wire obtained in Example 6 is shown in FIG. 25.

Further, a photograph of the surface condition is shown in FIG. 26.

Comparative Example 8

Pellets in which 0.1 part by mass of sodium benzenephosphonate was added to the pellets (A) were subjected to foamed electric wire molding at an extrusion speed of 15 rpm, at a flow volume of a nitrogen gas introduced of 18 cc/min and at a take-over speed of 100 m/min to thereby obtain a targeted foamed electric wire having an outer diameter of 0.80 mm and electrostatic capacity of 86.3 pF/m. The standard deviation of the variation in the wire diameter gave a value of 0.005, and the standard deviation of the variation in the electrostatic capacity gave a high value of 0.9 and the number of sparks gave a very bad value of 100 or more. As a result of analysis of the obtained foamed electric wire, the foaming ratio gave a value of 43% and the average cell size gave a large value of 45 μm; the surface condition was poor and the surface roughness gave a bad value of 13.5 μm.

A cross-sectional photograph of the electric wire obtained in Comparative Example 8 is shown in FIG. 11.

Further, a photograph of the surface condition is shown in FIG. 22.

Comparative Example 9

Pellets in which 1.0 part by mass of 2,6-naphthalenedicarboxylic acid was added to the pellets (A) were subjected to foamed electric wire molding at an extrusion speed of 15 rpm, at a flow volume of a nitrogen gas introduced of 18 cc/min, but the additive intensely decomposed, so no targeted foamed electric wire could be obtained.

Comparative Example 10

Pellets in which 1.0 part by mass of 1,3:2,4-bis-O-(4-methylbenzylidene)-D-sorbitol (crystal nucleating agent,

Gelol MD, manufactured by New Japan Chemical Co., Ltd.) was added to the pellets (A) were subjected to foamed electric wire molding at an extrusion speed of 15 rpm, at a flow volume of a nitrogen gas introduced of 18 cc/min, but the additive intensely decomposed, so no targeted foamed electric wire could be obtained.

Comparative Example 11

Pellets in which 1.0 part by mass of N,N'-dioctadecyl isophthalic acid amide was added to the pellets (A) were subjected to foamed electric wire molding at an extrusion speed of 15 rpm, at a flow volume of a nitrogen gas introduced of 18 cc/min, but the additive intensely decomposed, so no targeted foamed electric wire could be obtained.

[Table 3]

| | Example 1 | Example 2 | Example 3 | Example 4 | Example 5 | Example 6 |
|---|---|---|---|---|---|---|
| **Resin** | A | A | A | C | A | A |
| **Kind of additive** | **NA11** | **NA11** | **NA11** | **NA11** | **bisphenol phosphoric acid diester Ba salt** | **NU-100** |
| **Concentration of additive (parts by weight)** | 0.5 | 1.0 | 0.5 | 0.5 | 1.0 | 1.0 |
| Melting point of additive (°C) | > 400 (no peak) | > 400 (no peak) | > 400 (no peak) | > 400 (no peak) | > 400 (no peak) | > 400 (no peak) |
| Decomposition temperature of additive (°C) | 421 | 421 | 421 | 421 | 362 | 336 |
| **SP value of additive** | 10.3 | 10.3 | 10.3 | 10.3 | 10.3 | 12.1 |
| Kind of additive | - | - | PFA | - | - | PFA |
| Concentration of additive (parts by weight) | - | - | 1.0 | - | - | 2.0 |
| Decomposition temperature of additive (°C) | - | - | - | - | - | - |
| Kind of additive | - | - | - | - | - | - |
| Concentration of additive (parts by weight) | - | - | - | - | - | - |
| Outer diameter (mm) | 0.8 | 0.8 | 0.8 | 0.8 | 0.8 | 0.8 |
| Standard deviation | 0.003 | 0.003 | 0.003 | 0.004 | 0.003 | 0.004 |
| Electrostatic capacity (pF/m) | 86.6 | 86.1 | 86.5 | 86.3 | 86.2 | 86.5 |
| Standard deviation | 0.3 | 0.2 | 0.3 | 0.3 | 0.3 | 0.3 |
| The number of sparks generated (the number/ 3.500 m) | 2 | 3 | 2 | 1 | 2 | 6 |
| Foaming ratio (%) | 43 | 43 | 43 | 43 | 43 | 43 |
| Average cell size (μm) | 17 | 14 | 18 | 19 | 18 | 22 |
| Surface condition to touch | very good | very good | very good | very good | very good | very good |
| Surface roughness (μm) | 6.6 | 6.9 | 6.8 | 6.8 | 6.7 | 8.0 |

(continued)

| | Example 1 | Example 2 | Example 3 | Example 4 | Example 5 | Example 6 |
|---|---|---|---|---|---|---|
| **Resin** | A | A | A | C | A | A |
| **Foamed electric wire** | | | | | | |
| **Average value of aspect ratio** | 1.5 | 1.5 | 1.4 | 1.5 | 1.3 | 3.0 |
| **Standard deviation of aspect ratio** | 0.4 | 0.6 | 0.4 | 0.4 | 0.4 | 2.4 |
| **Proportion of aspect ratio of 3 or higher (%)** | 0.7 | 2.7 | 0.7 | 0.6 | 0.6 | 30.1 |

[Table 4]

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|---|---|
| Resin | A | A | B | A | A | A | A | A | A | A | A |
| Kind of additive | **none** | **BN** | **C8SBa salt** | **C8SBa salt** | **C8SBa salt** | **C4SNa salt** | **C4SBa salt** | **sodium benzenesulfo nate** | **2.6. naphtinalenedic arboxylic acid** | **Gelol MD** | **N,N'-dioctadecyl isophthalic acid amide** |
| Concentration of additive (parts by weight) | - | 1.0 | 0.028 | 01 | 0.08 | 0.01 | 0.1 | 0.1 | 1.0 | 1.0 | 1.0 |
| Melting point of additive (°C) | - | > 600 (no peak) | 342 | 342 | 342 | 364 | > 400 (no peak) | > 400 (no peak) | 273 | > 400 (no peak) | 132 |
| Decomposition temperature of additive (°C) | - | >600 | 413 | 413 | 413 | 425 | 480 | 342 | 297 | 255 | 228 |
| **SP value of additive** | - | - | 7.2 | 7.2 | 7.2 | 7.5 | 7.5 | 16.3 | 13.8 | 12.7 | 9.8 |
| Kind of additive | - | - | **CaTB** | - | **CaTB** | **BN** | - | - | - | - | - |
| Concentration of additive (parts by weight) | - | - | 0.01 | - | 0.01 | 0.4 | - | - | - | - | - |
| Decomposition temperature of additive (°C) | - | - | - | - | - | - | - | - | - | - | - |
| Kind of additive | - | - | **BN** | - | - | - | - | - | - | - | - |
| Concentration of additive (parts by weight) | - | - | 0.4 | - | - | - | - | - | - | - | - |
| Outer diameter (mm) | 08 | 0.8 | 0.8 | 08 | 0.8 | 0.8 | 0.8 | 0.8 | - | - | - |
| Standard deviation | | 0.004 | 0.005 | 0.007 | 0.005 | 0.004 | 0.004 | 0.005 | - | - | - |

(continued)

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|---|---|
| Resin | A | A | B | A | A | A | A | A | A | A | A |
| Kind of additive | **none** | **BN** | **C8SBa salt** | **C8SBa salt** | **C8SBa salt** | **C4SNa salt** | **C4SBa salt** | **sodium benzenesulfo nate** | **2.6. naphtinalenedic arboxylic acid** | **Gelol MD** | **N,N'-di-octadecyl isophthalic acid amide** |
| Electrostatic capacity (pF/m) | | 862 | 86.4 | 86.5 | 86.5 | 86.1 | 86.1 | 86.3 | - | - | - |
| Standard deviation | | 1.9 | 0.6 | 0.7 | 0.3 | 0.4 | 0.3 | 0.9 | - | - | - |
| The number of sparks generated (the number/3,500 m) | 0 | >100 | 12 | 9 | 8 | 15 | 8 | >100 | - | - | - |
| Foaming ratio (%) | almost no foaming | 43 | 43 | 43 | 43 | 43 | 43 | 43 | - | - | - |
| Average cell size (μm) | 103 | 36 | 14 | 17 | 17 | 30 | 17 | 45 | - | - | - |
| Surface condition to touch | poor | poor | good | good | good | poor | good | poor | - | - | - |
| Surface roughness (μm) | | 12.4 | 10.0 | 10.9 | 10.4 | 12.3 | 10.0 | 13.5 | - | - | - |
| **Foamed electric wire** | | | | | | | | | | | |
| **Average value of aspect ratio** | - | 1.9 | 2.0 | 2.3 | 3.2 | 2.0 | 2.2 | 1.7 | - | - | |
| **Standard deviation of aspect ratio** | - | 09 | 1.8 | 2.1 | 22 | 1.9 | 1.4 | 1.2 | - | - | - |
| **Proportion of aspect ratio of 3 or higher (%)** | - | 6.7 | 9.9 | 15.8 | 38.8 | 8.1 | 14.6 | 7.1 | - | - | - |

Industrial Applicability

The foam molding composition of the present disclosure is suitable, in particular, as a material for forming a covering material of a foamed electric wire.

## Claims

1. A foam molding composition, comprising a fluororesin (A), and a compound (B) having a pyrolysis temperature of 300°C or higher and a solubility parameter (SP value) of 8 to 15.

2. The foam molding composition according to claim 1, wherein the compound (B) is a compound comprising at least one partial structure selected from the group consisting of aromatic rings, phosphoric acid ester groups and amide groups.

3. The foam molding composition according to claim 2, wherein the compound (B) is a compound containing one or more C6-14 aromatic rings, or a salt thereof.

4. The foam molding composition according to claim 2, wherein the compound (B) is at least one compound selected from the group consisting of phosphoric acid esters and salts thereof, phosphoric acid ester complex compounds, and compounds having two or more amide groups.

5. The foam molding composition according to claim 4, wherein the salt of the compound (B) is a salt with an alkali metal or an alkaline earth metal.

6. The foam molding composition according to any one of claims 2 to 5, wherein the compound (B) is at least one of compounds represented by the following formulae (1), (2), (3) and (4):

[Formula 1]

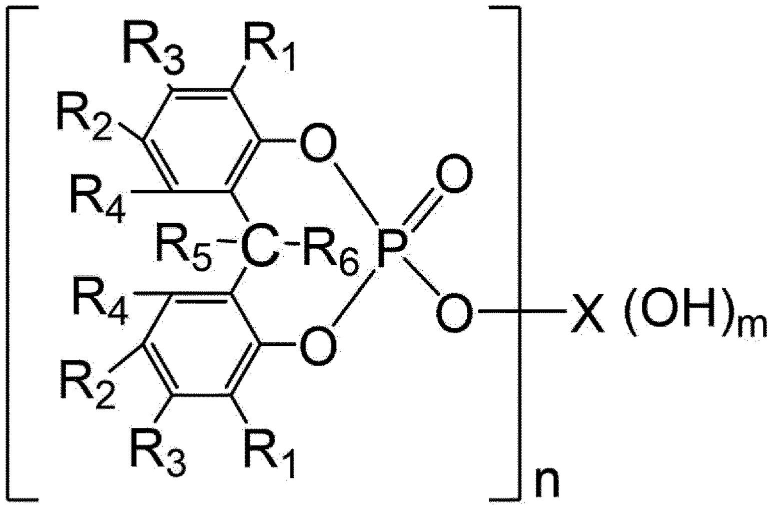

(1)

[Formula 2]

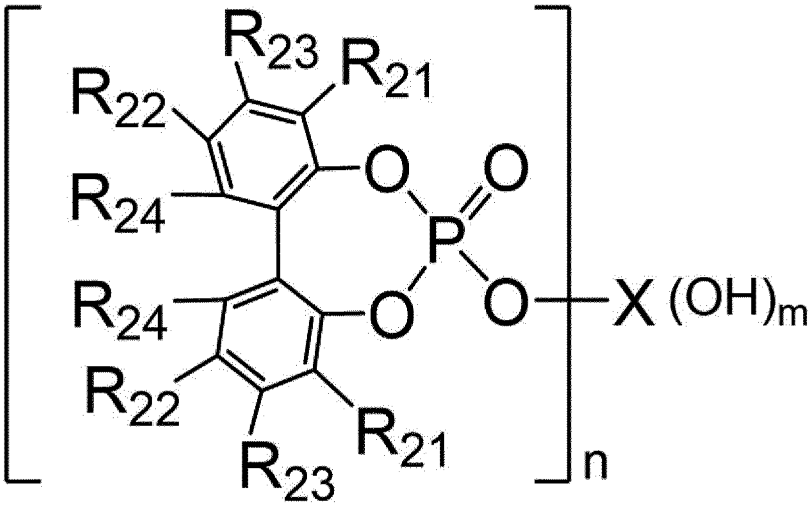

(2)

[Formula 3]

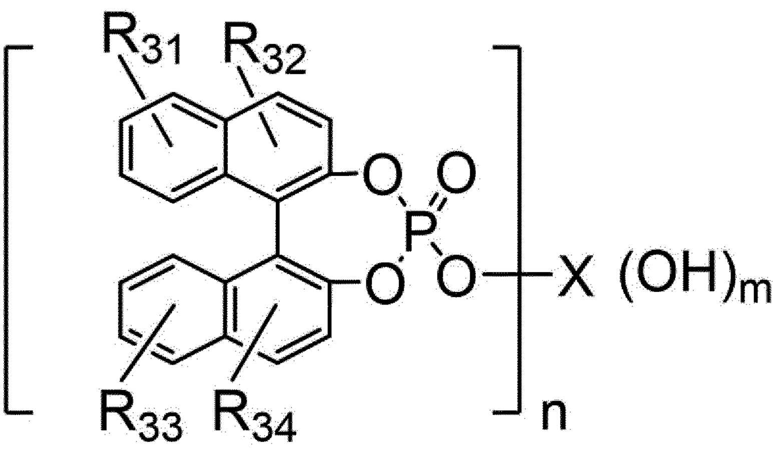

(3)

[Formula 4]

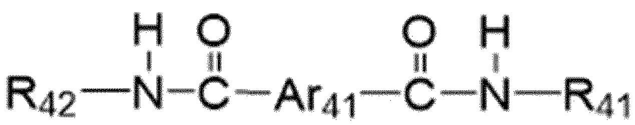

(4)

wherein $R_1$, $R_2$, $R_3$, $R_4$, $R_{21}$, $R_{22}$, $R_{23}$, $R_{24}$, $R_{31}$, $R_{32}$, $R_{33}$, $R_{34}$, $R_{41}$ and $R_{42}$ each represent a hydrogen atom, an alkyl group or cycloalkyl group having 1 to 8 carbon atoms, or an aryl group, alkylaryl group or arylalkyl group having 6 to 12 carbon atoms; $Ar_{41}$ represents an aryl group; $R_5$ and $R_6$ each represent a hydrogen atom or a methyl group; and n represents an integer of 1 or 2, m represents an integer of 0 to 2, and X represents a m+n-valent metal.

**7.** The foam molding composition according to claim 6, wherein $R_1$, $R_2$, $R_{21}$, $R_{22}$, $R_{31}$ and $R_{33}$ in the formula (1), the formula (2) and the formula (3) are each an alkyl group having 1 to 8 carbon atoms.

**8.** The foam molding composition according to claim 6 or 7, wherein X in the formula (1), the formula (2) and the formula (3) is at least one among sodium, potassium, rubidium, calcium and barium.

**9.** The foam molding composition according to any one of claims 6 to 8, wherein the compound (B) is an aromatic

cyclic phosphoric acid ester salt represented by the formula (1).

**10.** The foam molding composition according to claim 9, wherein the compound (B) is 2,2'-methylenebis(4,6-di-t-butylphenyl) sodium phosphate.

**11.** The foam molding composition according to any one of claims 1 to 10, wherein the fluororesin (A) is a melt processable fluororesin.

**12.** The foam molding composition according to any one of claims 1 to 11, wherein the fluororesin (A) is at least one selected from the group consisting of tetrafluoroethylene/hexafluoropropylene-based copolymers, tetrafluoroethylene/perfluoro(alkyl vinyl ether) copolymers and tetrafluoroethylene/ethylene-based copolymers.

**13.** The foam molding composition according to any one of claims 1 to 12, wherein the fluororesin (A) is a fluororesin having been subjected to a fluorination treatment.

**14.** The foam molding composition according to any one of claims 1 to 13, wherein the foam molding composition is substantially free from fluorine-based low-molecular weight compound.

**15.** A foam molded body, being obtained from the foam molding composition according to any one of claims 1 to 14.

**16.** The foam molded body according to claim 15, wherein the foam molded body is substantially free from fluorine-based low-molecular weight compound.

**17.** A foamed electric wire, comprising a core wire and a covering material covering the core wire and obtained from the foam molding composition according to any one of claims 1 to 14.

**18.** The foamed electric wire according to claim 17, wherein the foamed electric wire is substantially free from fluorine-based low-molecular weight compound.

**19.** A foamed electric wire, comprising a core wire, and a fluororesin layer or a fluororesin composition layer covering the core wire,

wherein the fluororesin layer or the fluororesin composition layer contains cells, and
wherein an average aspect ratio of the cells is 1.9 or lower, in observation of a cut surface parallel to the lengthwise direction of the foamed electric wire.

**20.** A foamed electric wire, comprising a core wire, and a fluororesin layer or a fluororesin composition layer covering the core wire,

wherein the fluororesin layer or the fluororesin composition layer contains cells, and
wherein a presence proportion of cells having an aspect ratio of 3 or higher is 13% or lower with respect to a total amount of the cells measured in the observation of the cut surface parallel to the lengthwise direction of the foamed electric wire, in observation of a cut surface parallel to the lengthwise direction of the foamed electric wire.

**21.** A foamed electric wire, comprising a core wire, and a fluororesin layer or a fluororesin composition layer covering the core wire,

wherein the fluororesin layer or the fluororesin composition layer contains cells, and
wherein a standard deviation of aspect ratios of the cells is 1.3 or lower, in observation of a cut surface parallel to the lengthwise direction of the foamed electric wire.

**22.** A foamed electric wire, comprising a core wire, and a fluororesin layer or a fluororesin composition layer covering the core wire,

wherein the fluororesin layer or the fluororesin composition layer contains cells, and
wherein a foaming ratio of the fluororesin layer or the fluororesin composition layer is 35% or higher and a surface roughness thereof is 9.0 $\mu$m or smaller.

**23.** The foamed electric wire according to any one of claims 19 to 22, wherein an average cell size of the cells is 40 μm or smaller, in observation of a cut surface perpendicular to the lengthwise direction of the foamed electric wire.

**24.** A method for producing a foam molded body, comprising foam molding the foam molding composition according to any one of claims 1 to 14.

**25.** A method for producing an electric wire, comprising covering a core wire with the foam molding composition according to any one of claims 1 to 14 to thereby obtain the electric wire.

[Fig. 1]

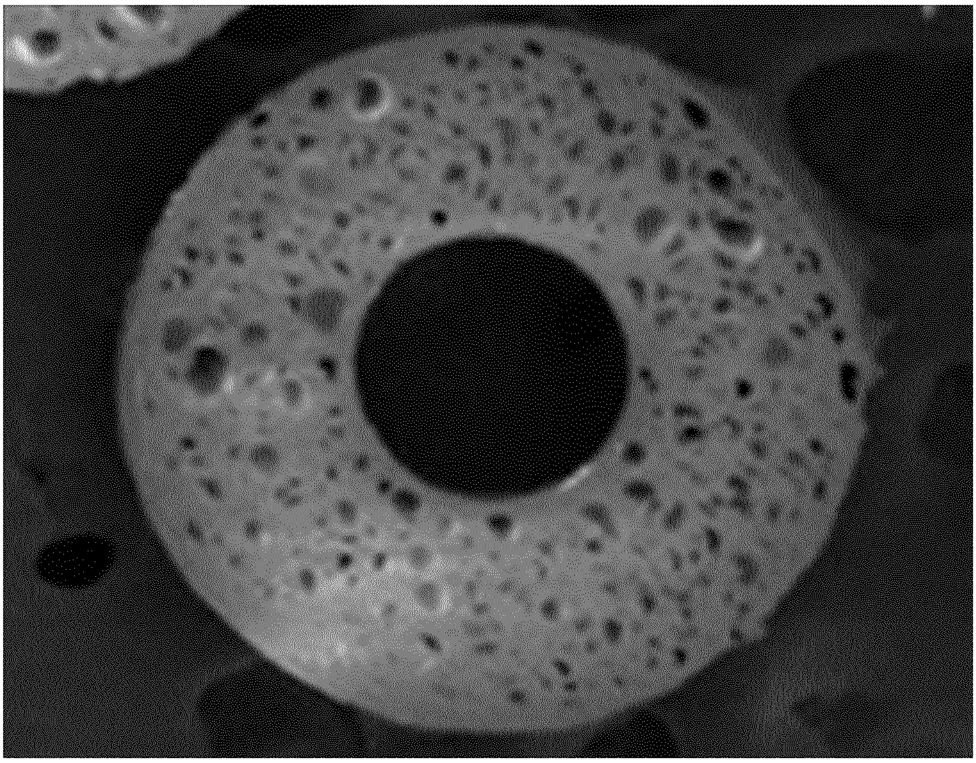

[Fig. 2]

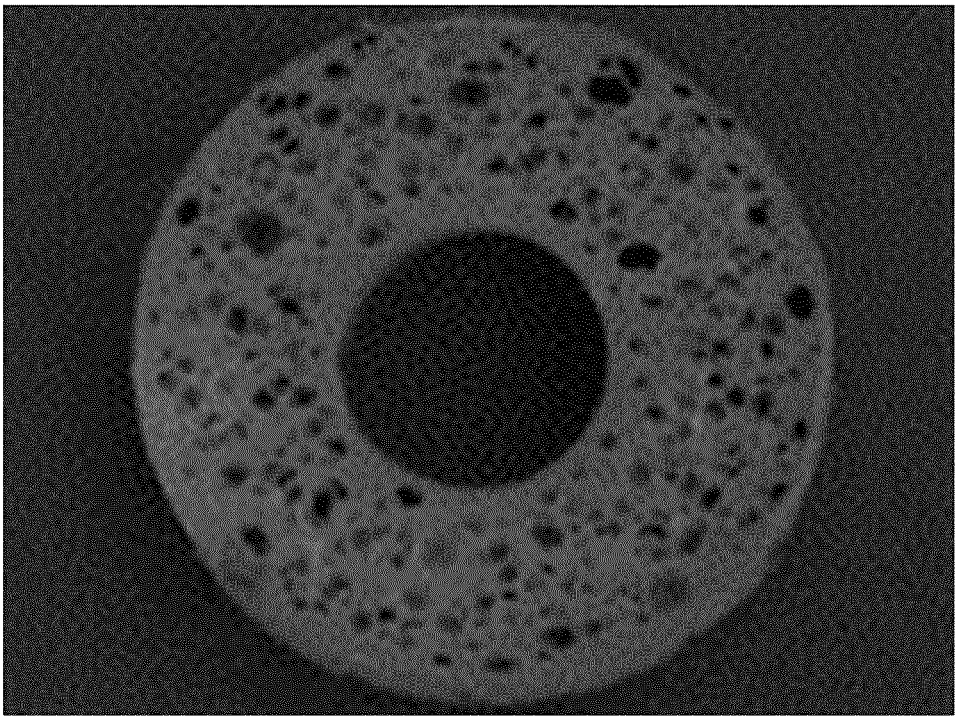

[Fig. 3]

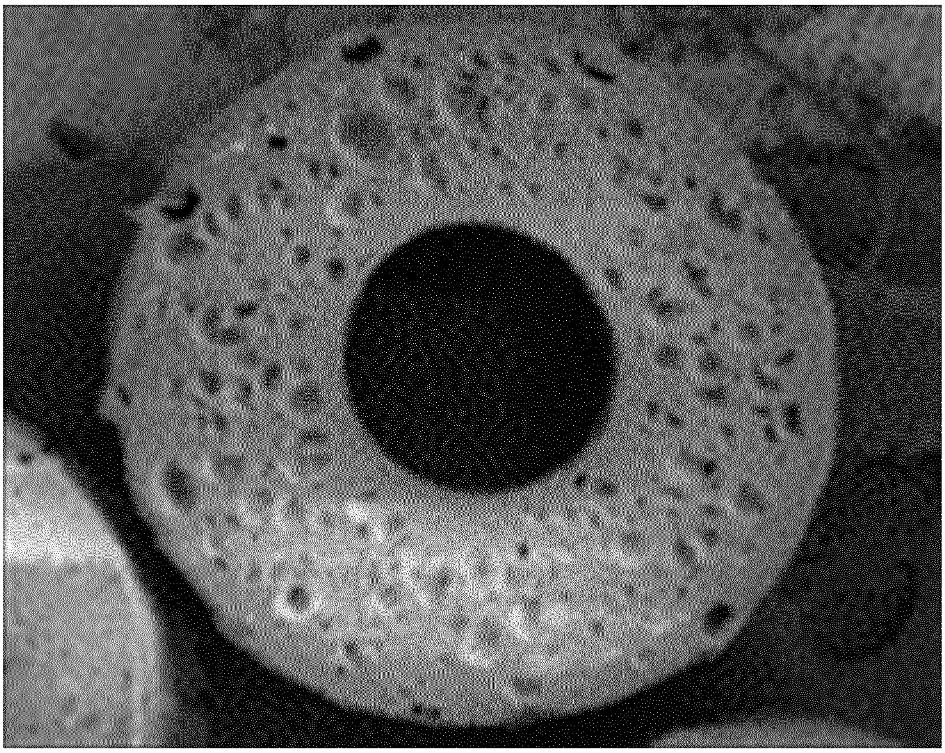

[Fig. 4]

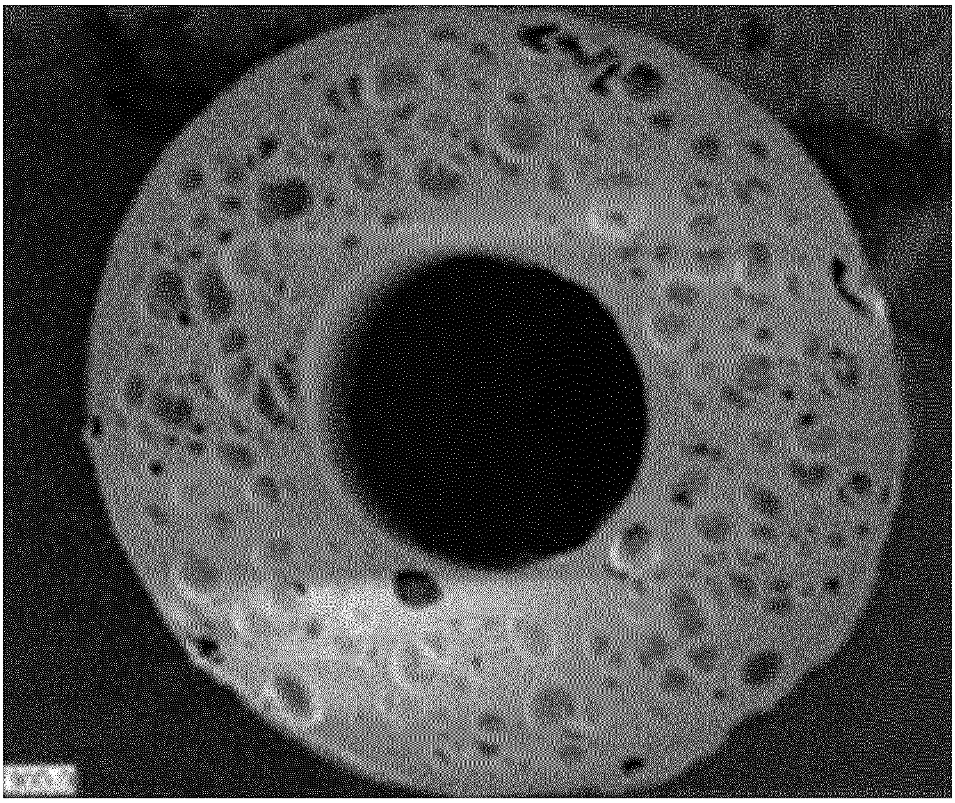

[Fig. 5]

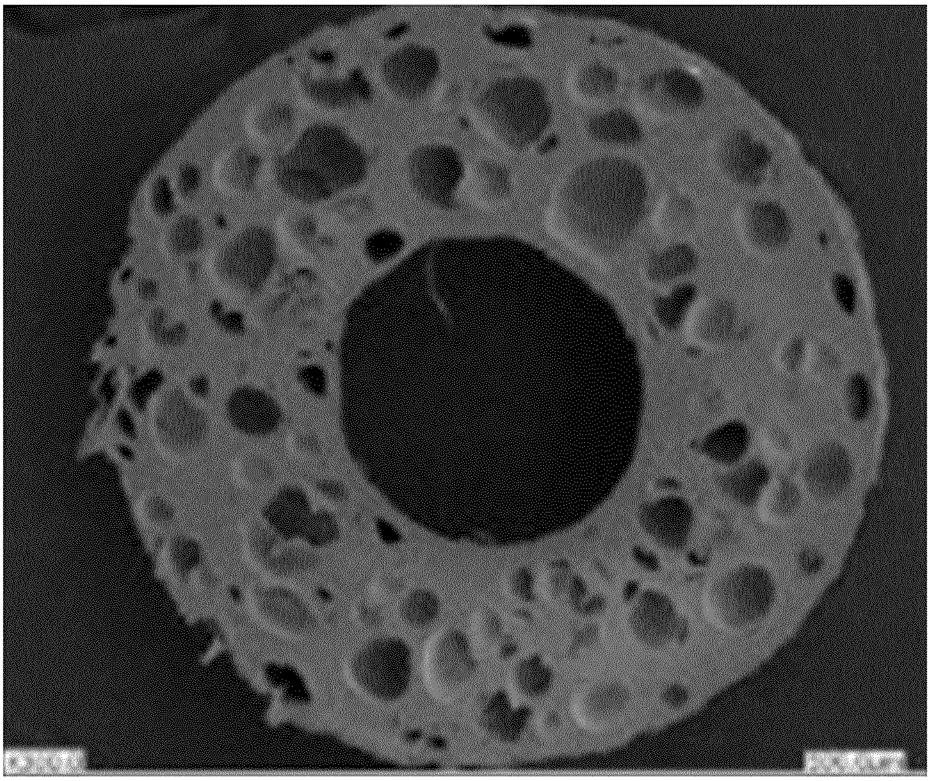

[Fig. 6]

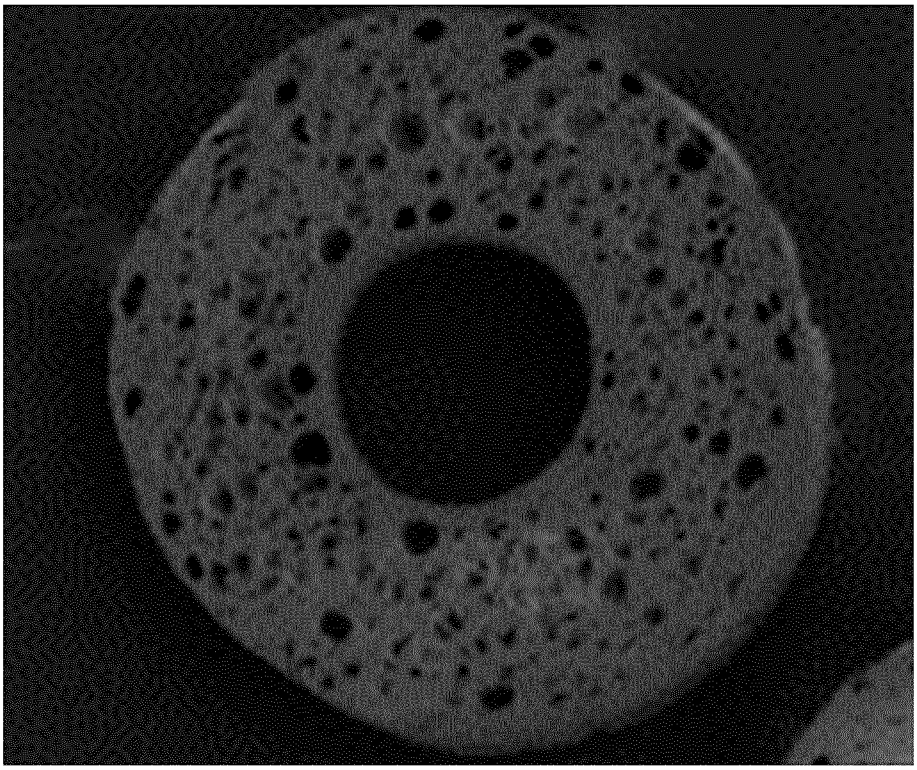

[Fig. 7]

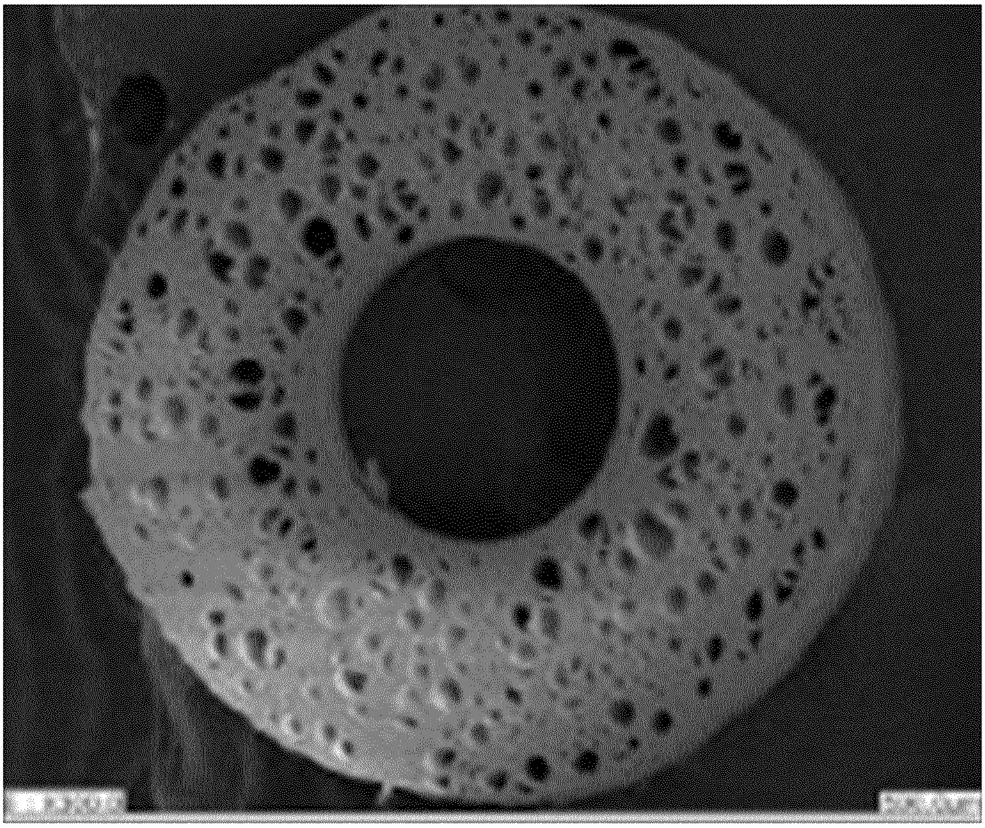

[Fig. 8]

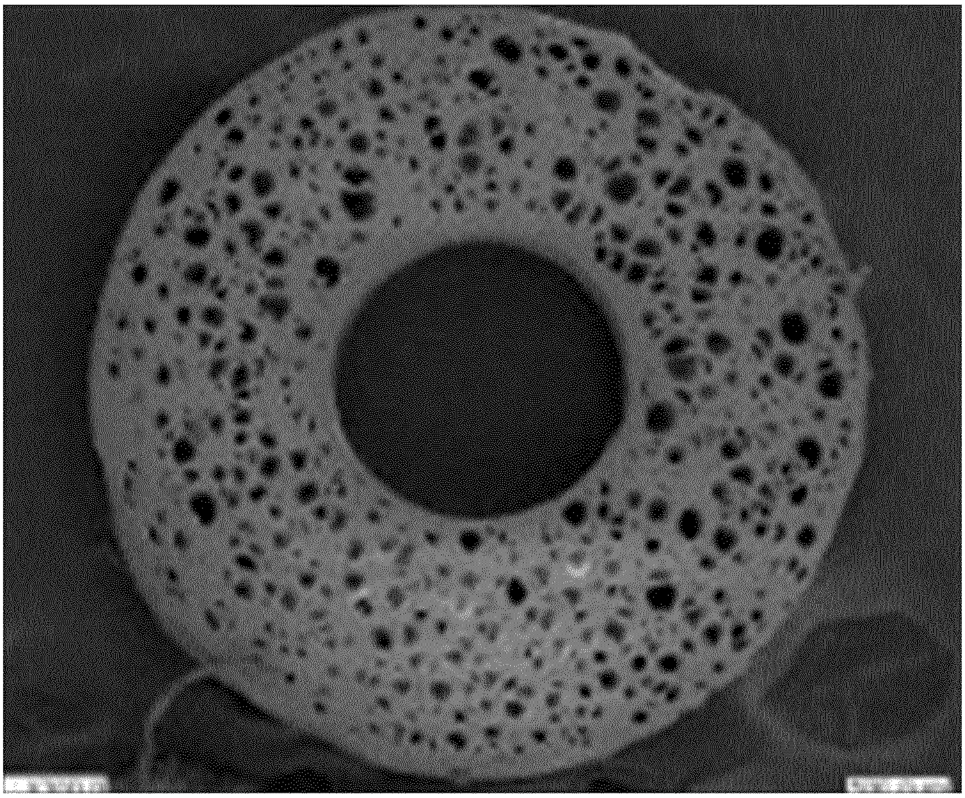

[Fig. 9]

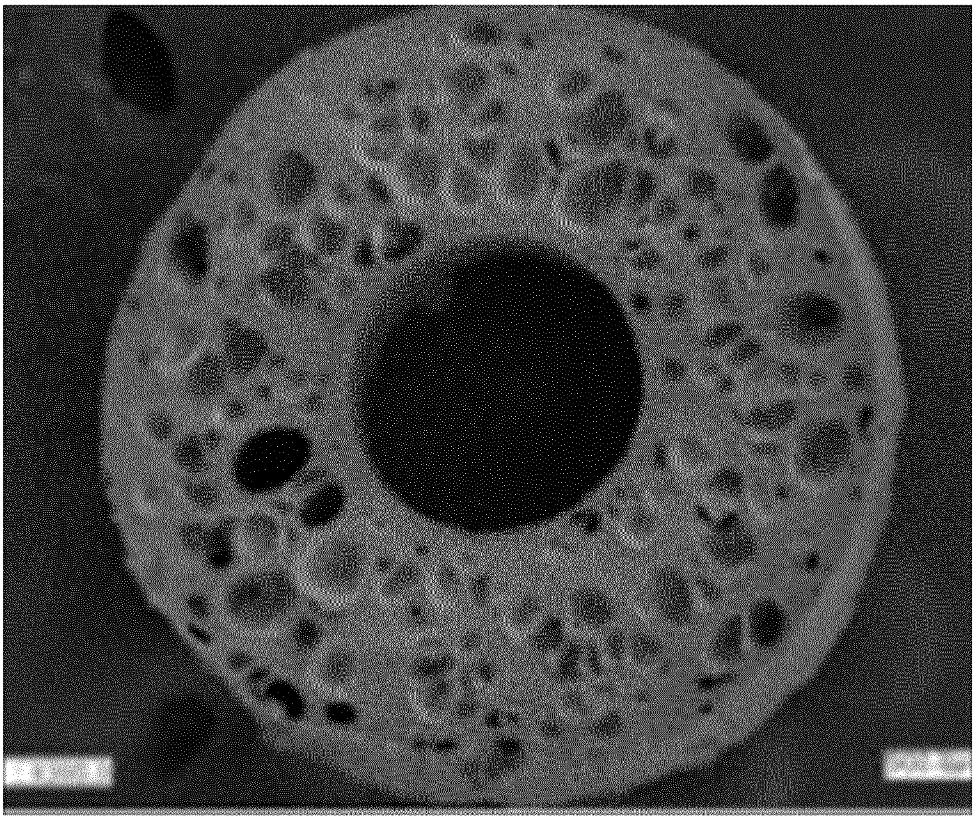

[Fig. 10]

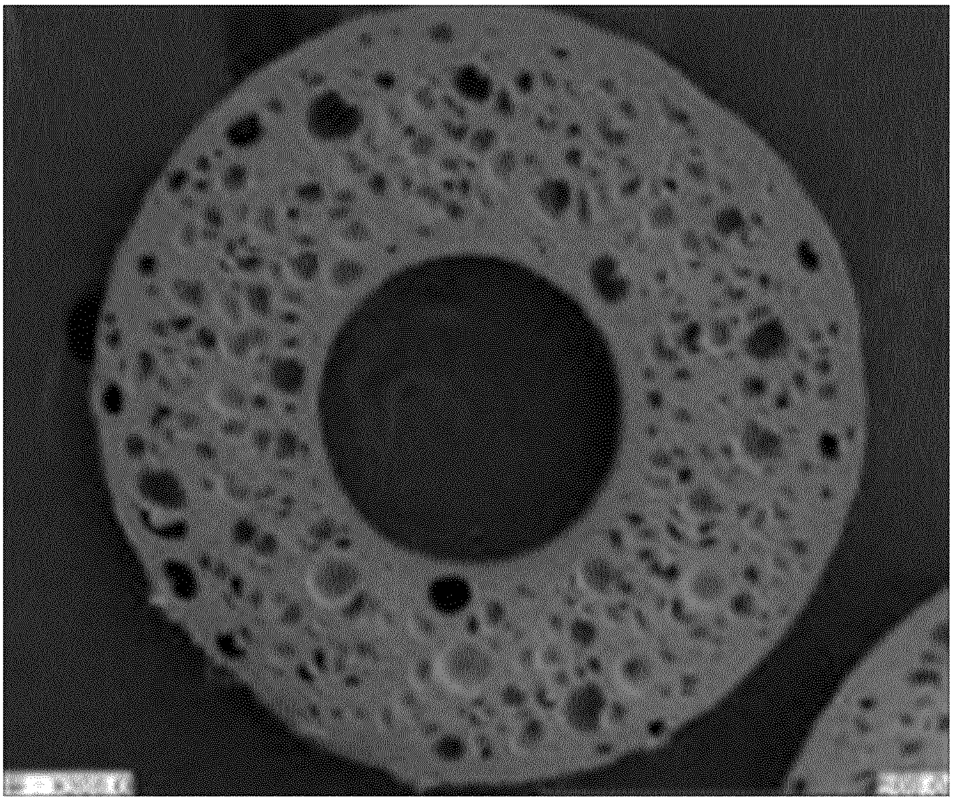

[Fig. 11]

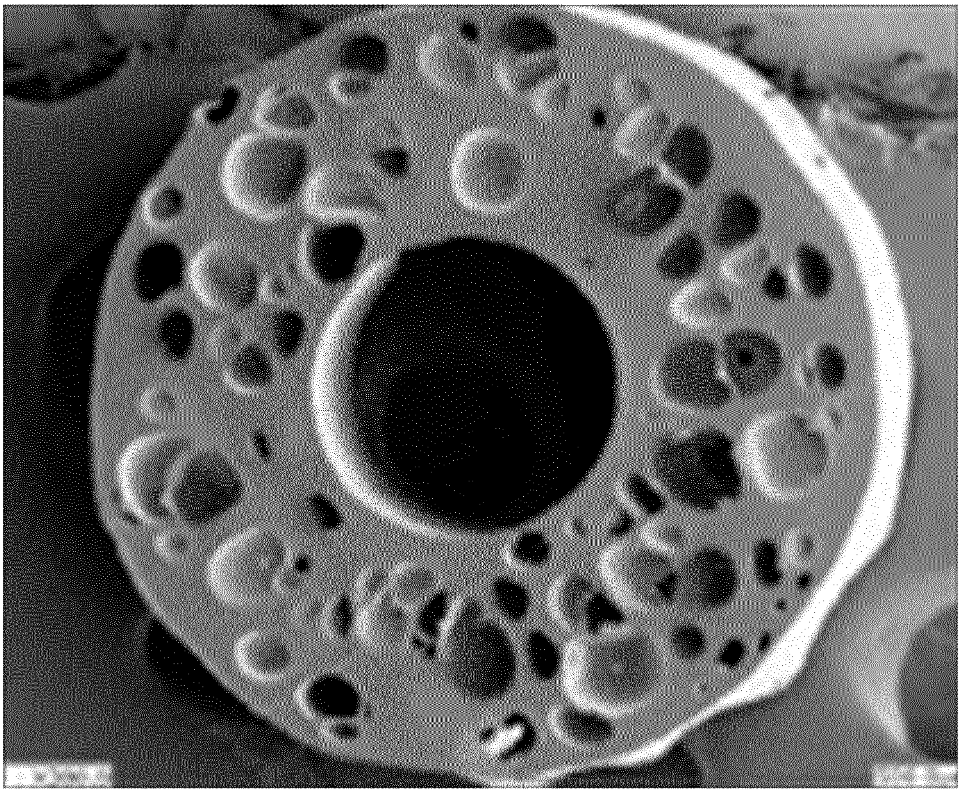

[Fig. 12]

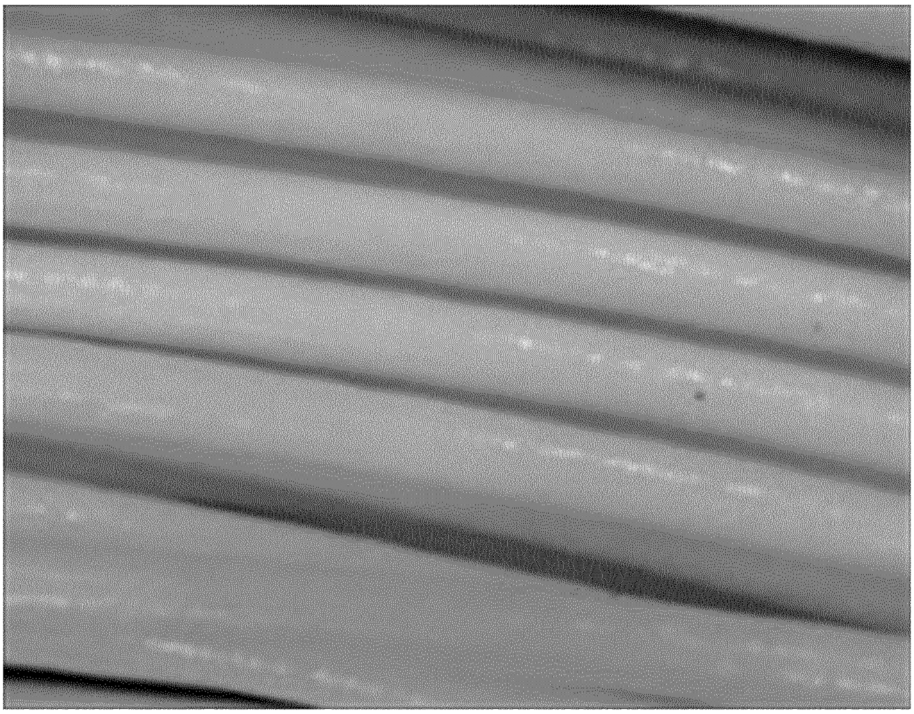

[Fig. 13]

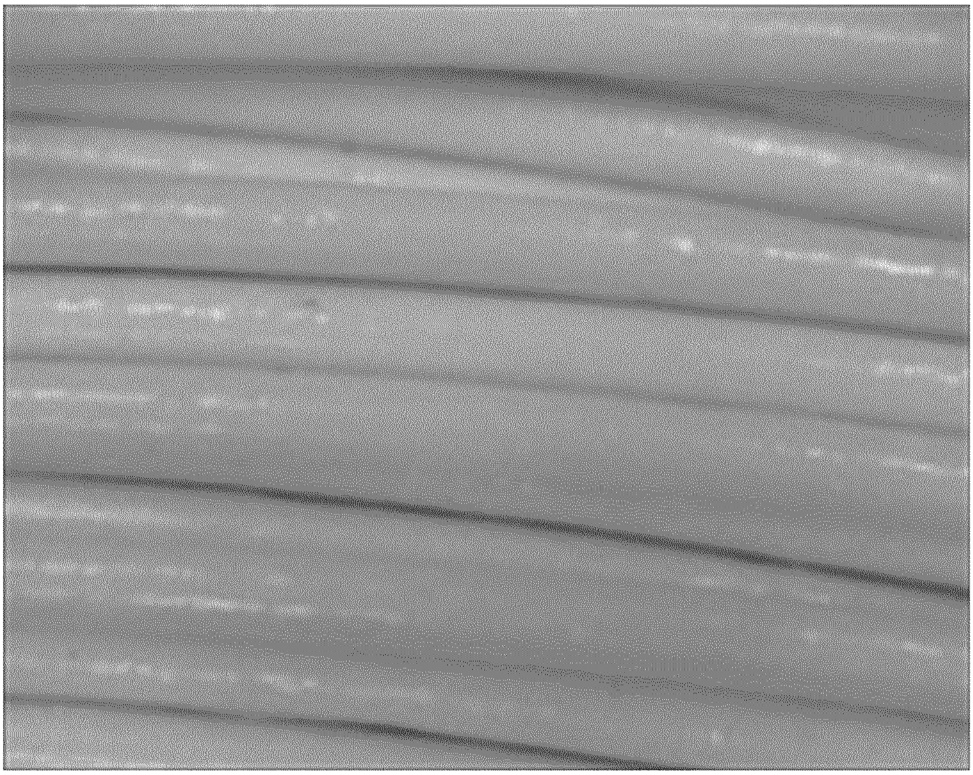

[Fig. 14]

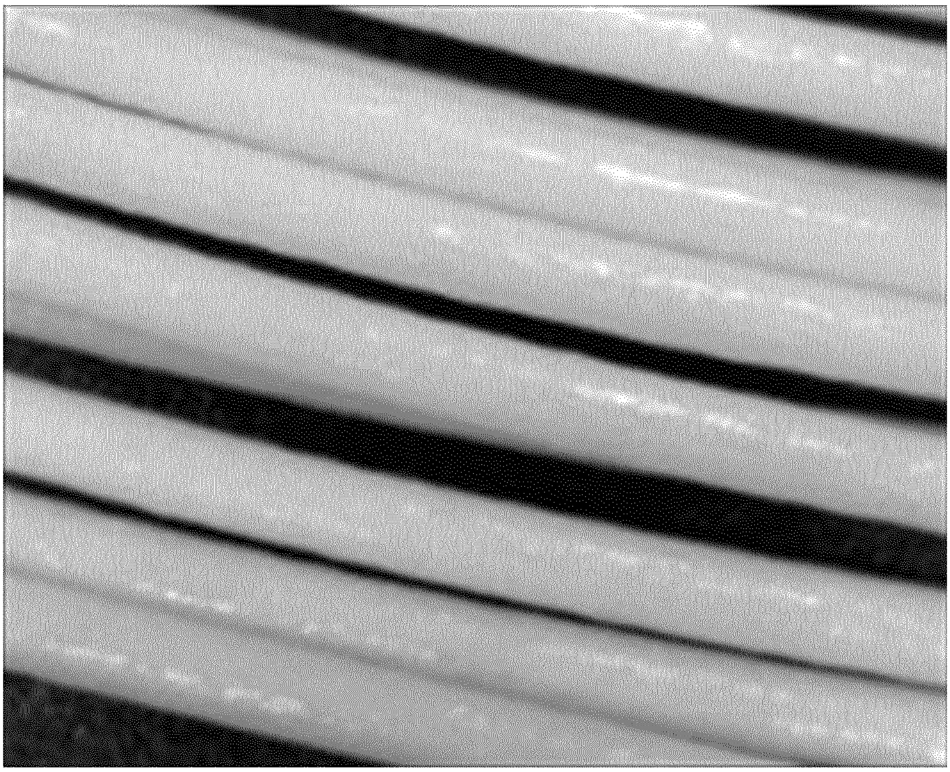

[Fig. 15]

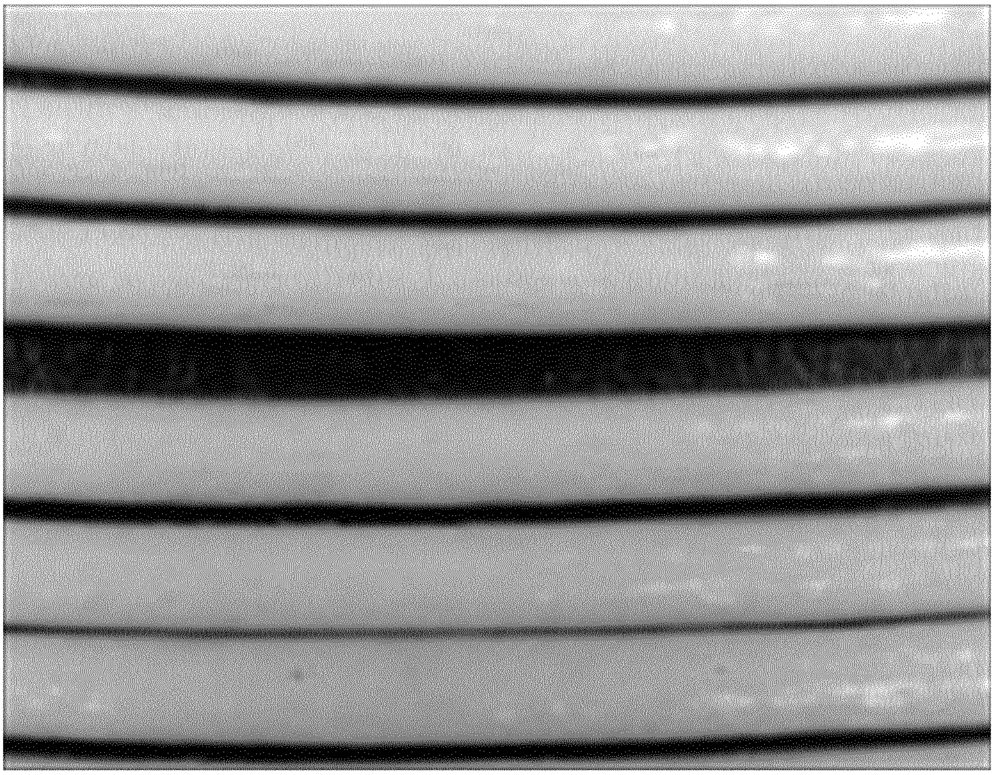

[Fig. 16]

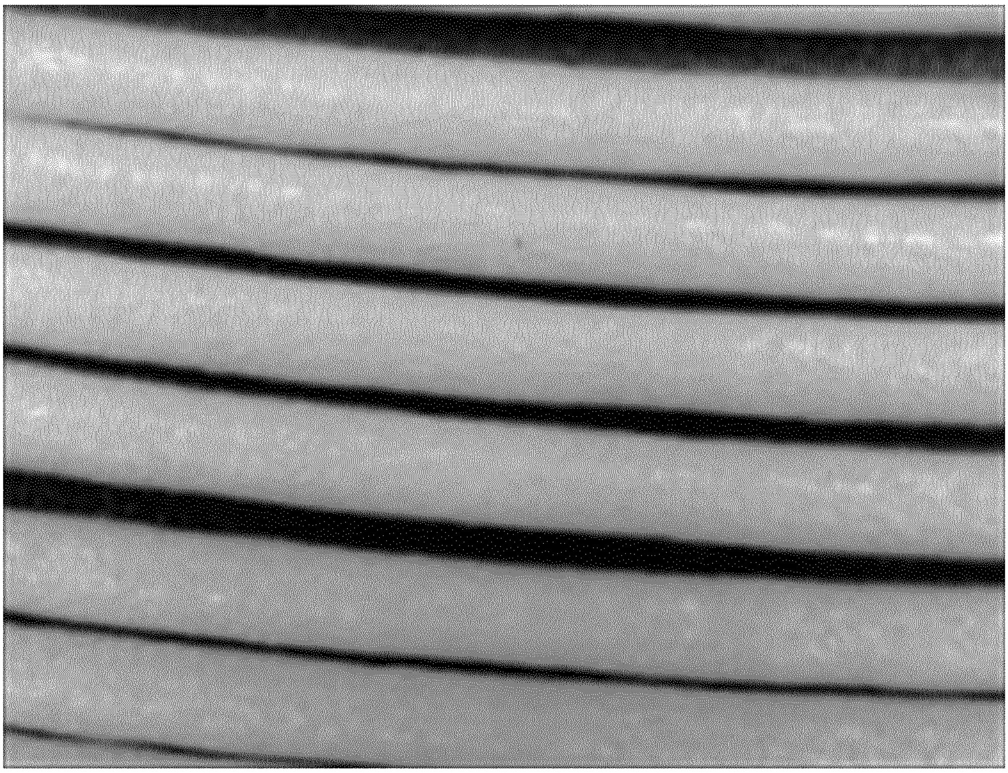

[Fig. 17]

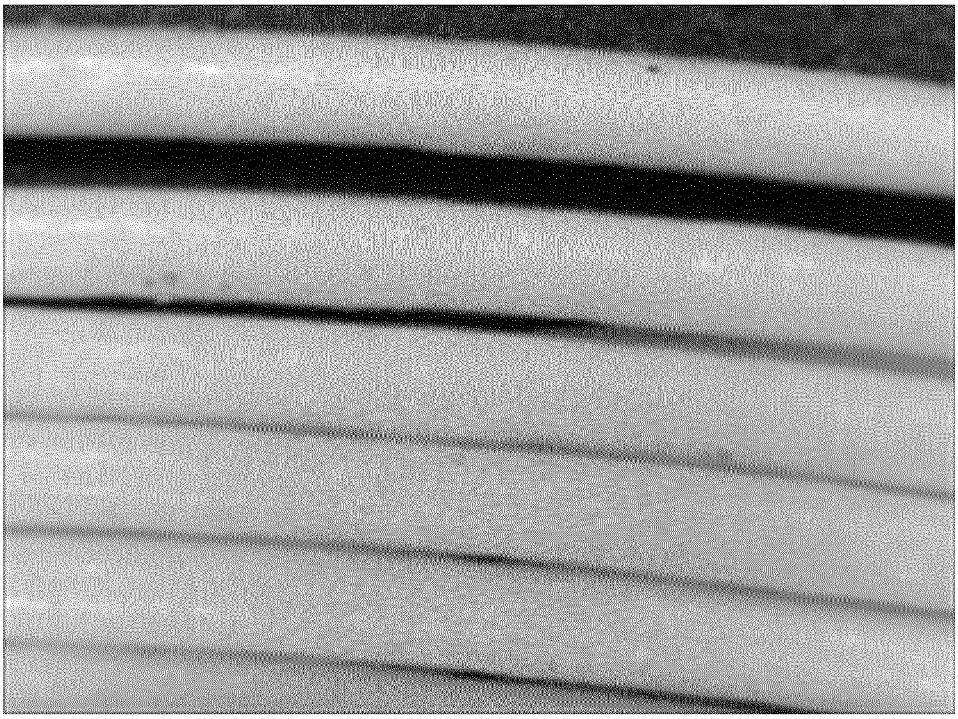

[Fig. 18]

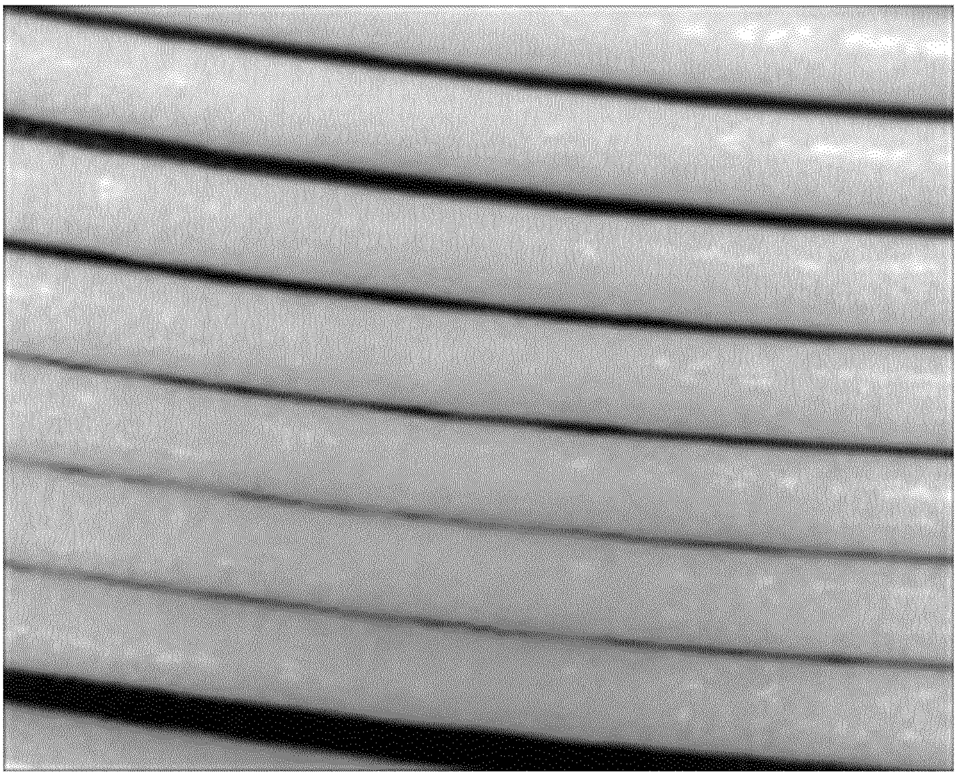

[Fig. 19]

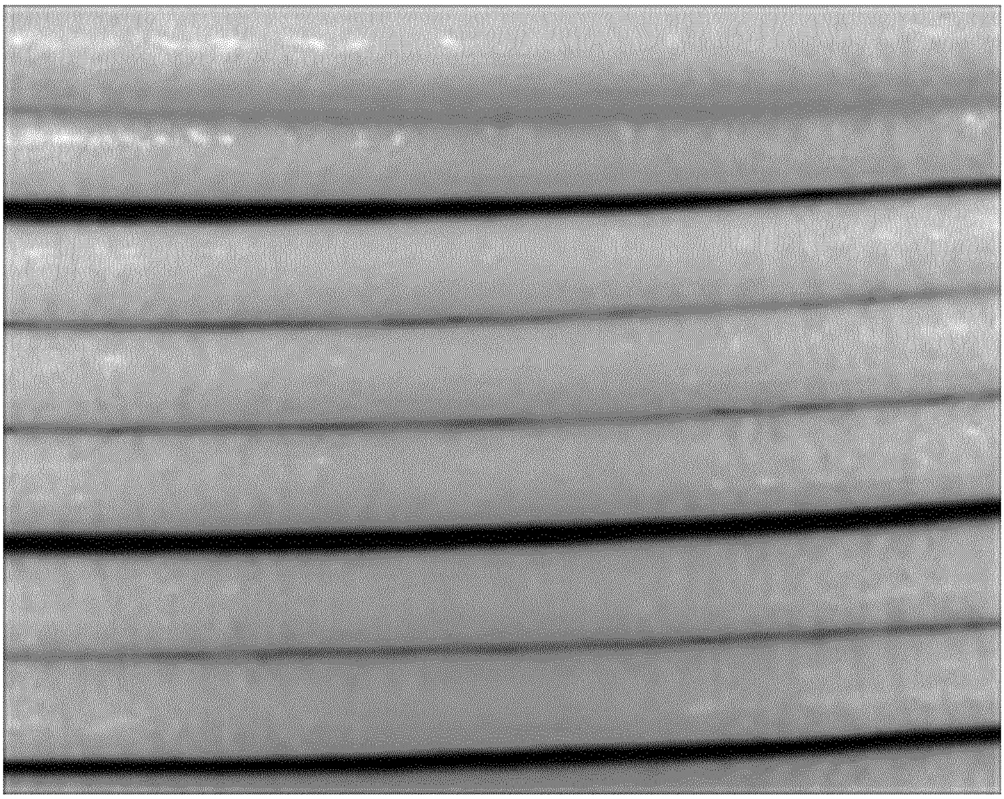

[Fig. 20]

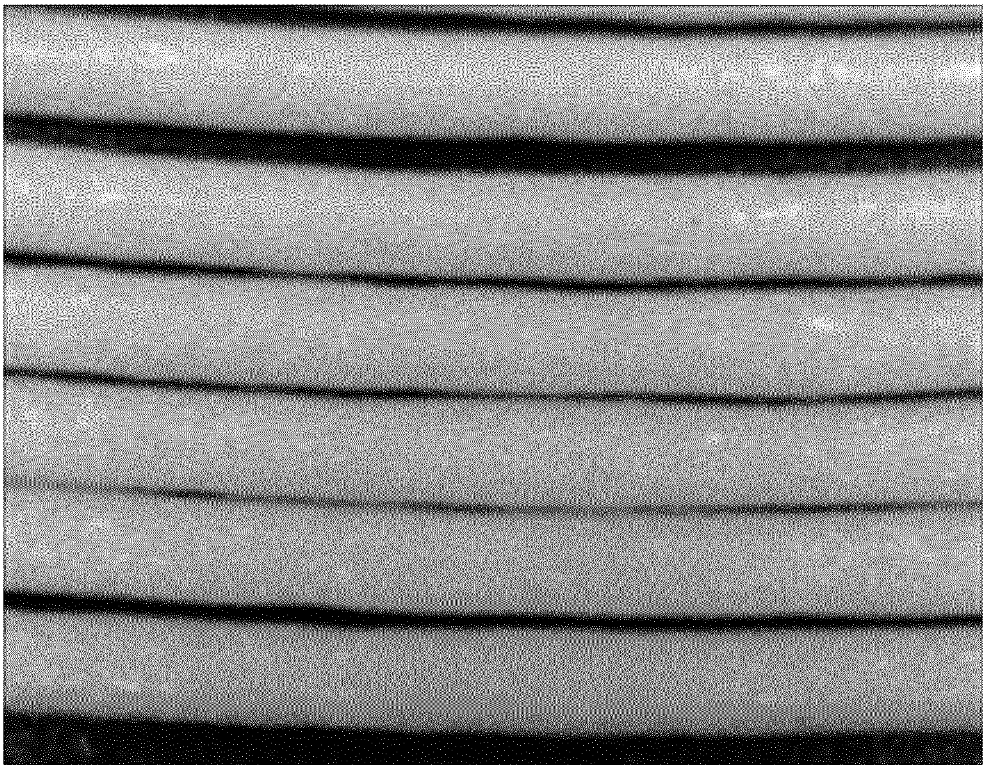

[Fig. 21]

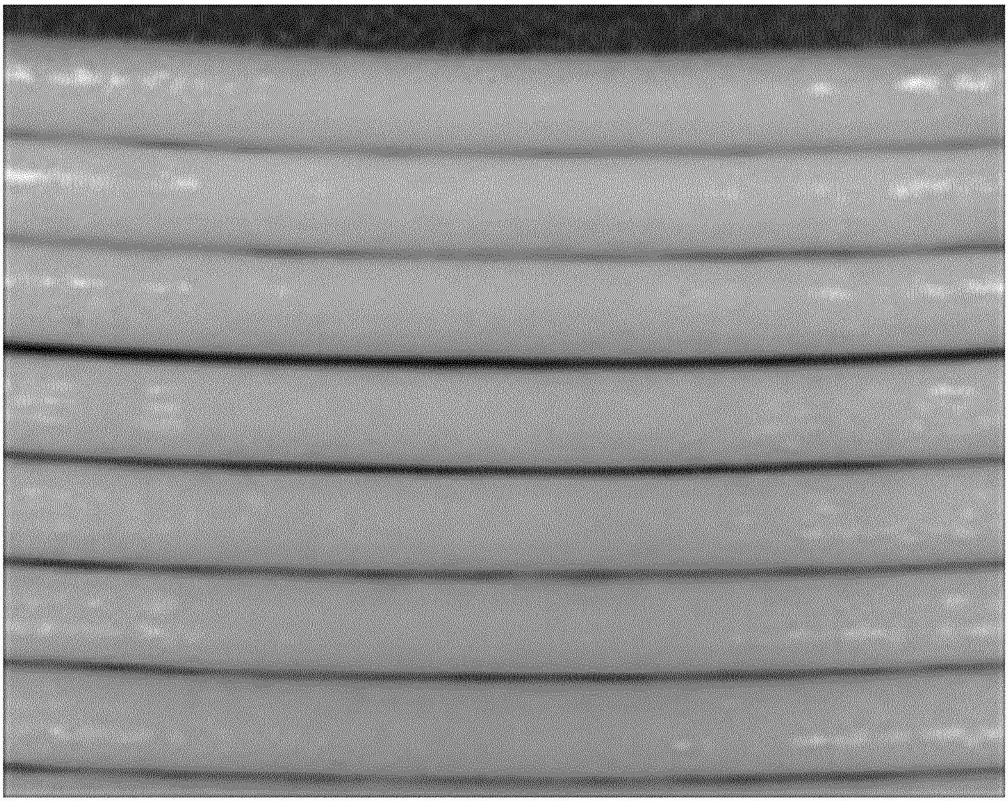

[Fig. 22]

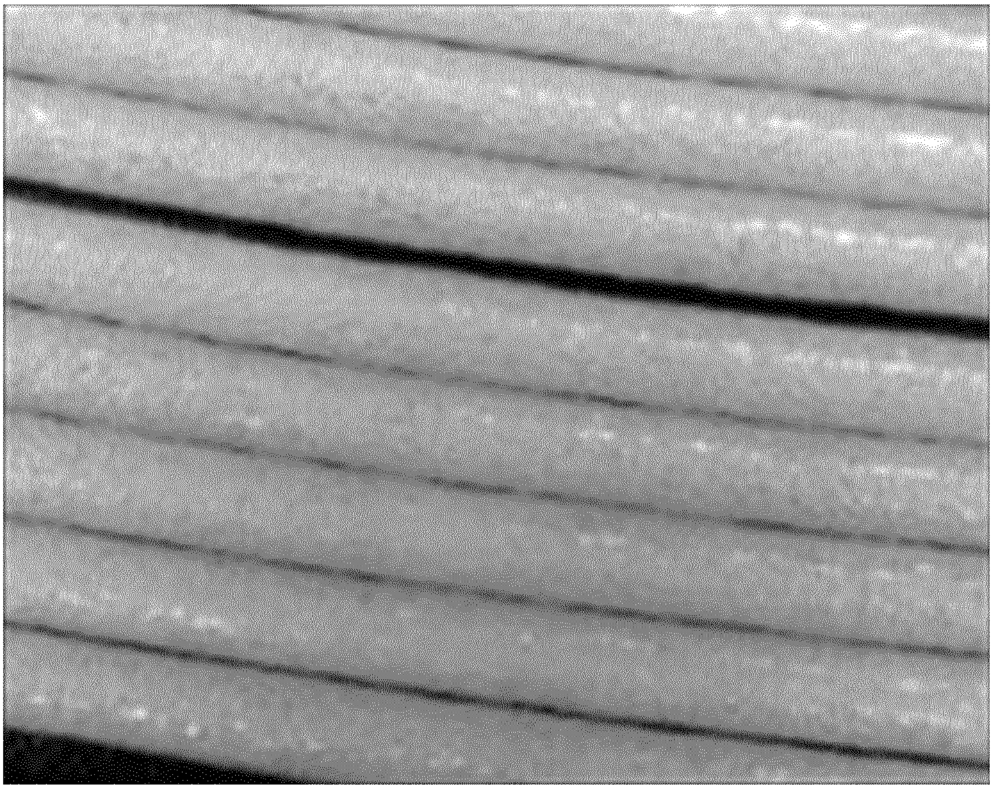

[Fig. 23]

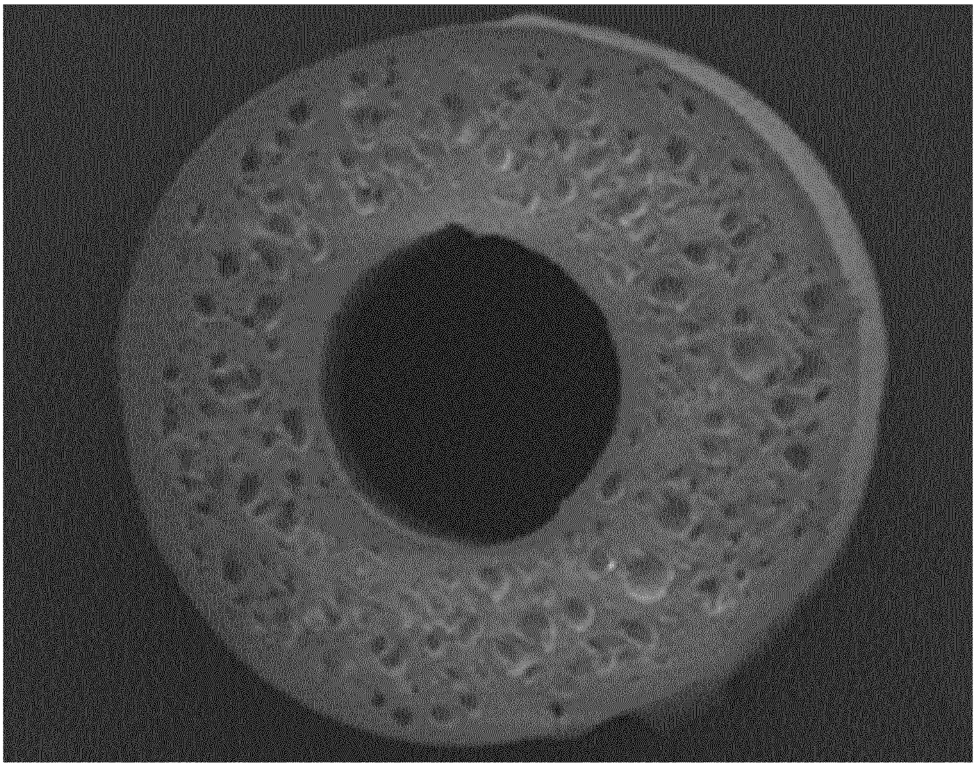

[Fig. 24]

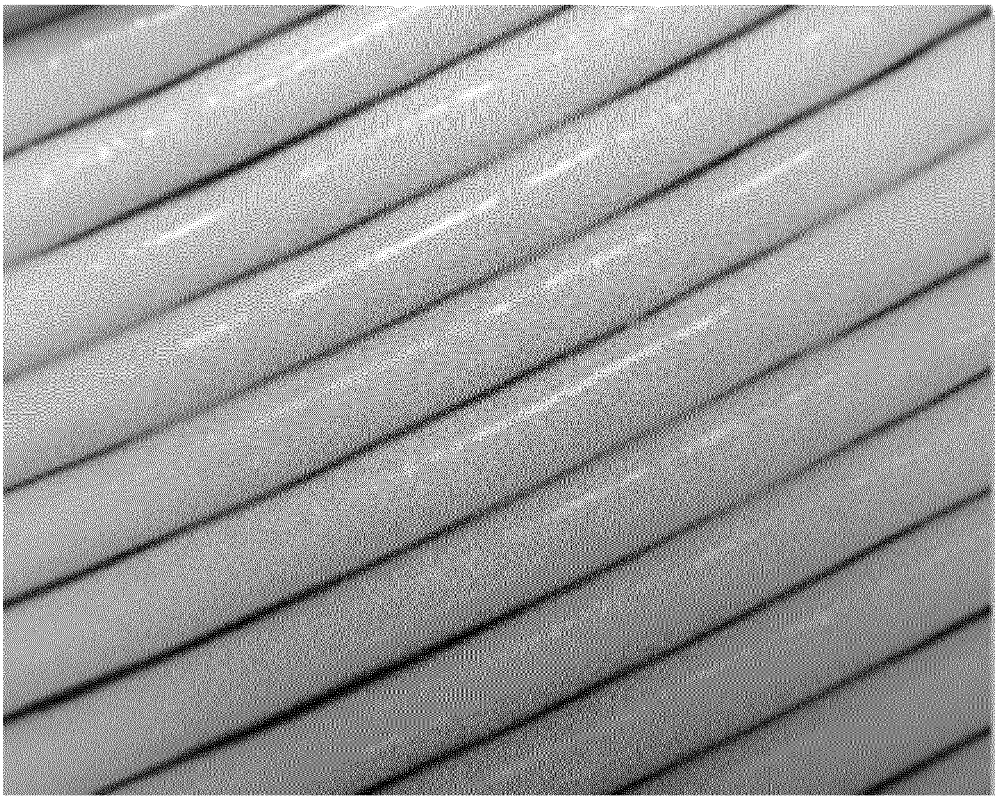

[Fig. 25]

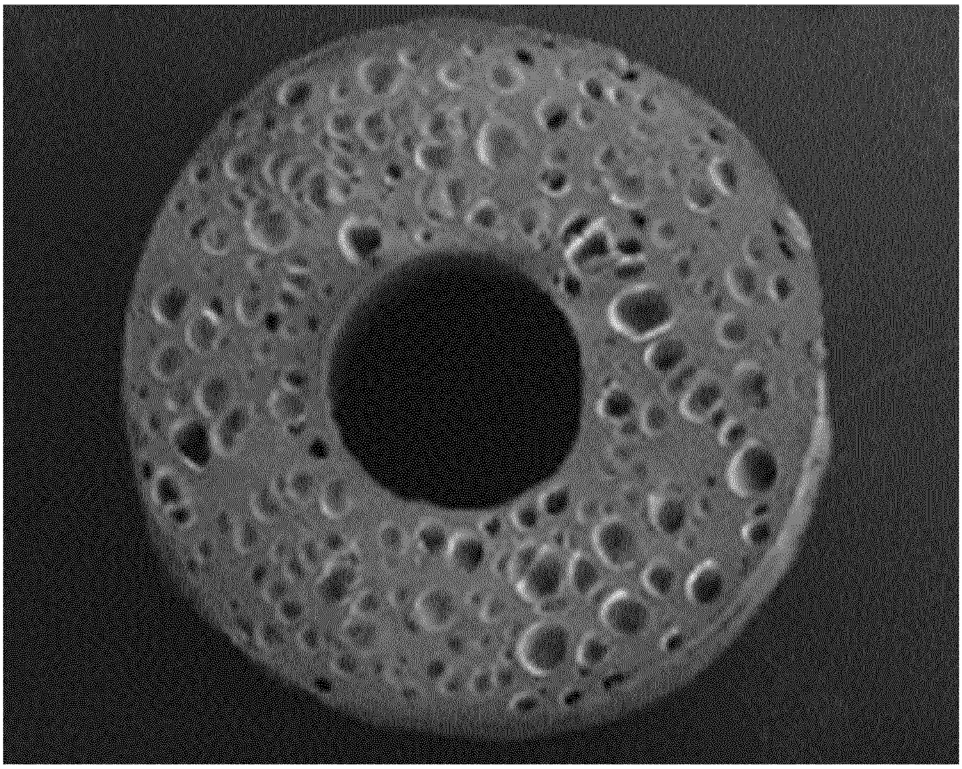

[Fig. 26]

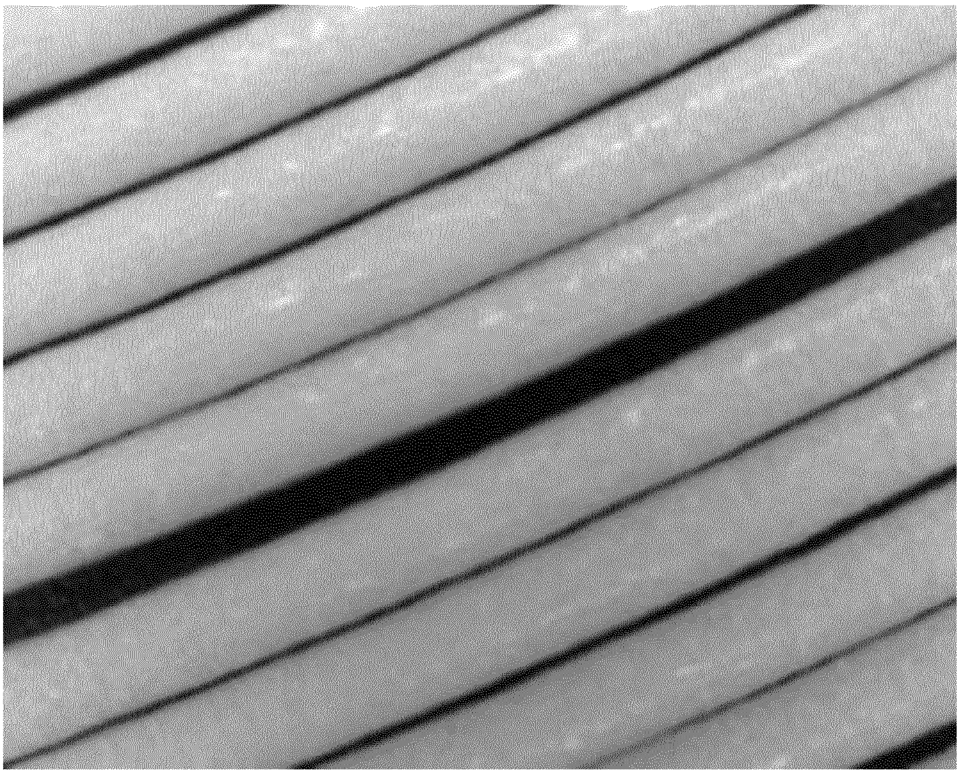

**INTERNATIONAL SEARCH REPORT**

International application No.
**PCT/JP2021/028802**

**A. CLASSIFICATION OF SUBJECT MATTER**

***C08K 5/521***(2006.01)i; ***C08L 27/12***(2006.01)i; ***C08L 27/18***(2006.01)i; ***C08J 9/04***(2006.01)i; ***H01B 13/14***(2006.01)i; ***H01B 7/02***(2006.01)i
FI: C08J9/04 107; C08K5/521; C08L27/12; C08L27/18; H01B7/02 G; H01B13/14 B; C08J9/04 CEW

According to International Patent Classification (IPC) or to both national classification and IPC

**B. FIELDS SEARCHED**

Minimum documentation searched (classification system followed by classification symbols)

C08K5/521; C08L27/12; C08L27/18; C08J9/04; H01B13/14; H01B7/02

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2005/019320 A1 (DAIKIN INDUSTRIES, LTD.) 03 March 2005 (2005-03-03)<br>claims 1, 10-11 | 20<br>1-19, 21-25 |
| X<br>A | JP 2017-54800 A (JUNKOSHA INC.) 16 March 2017 (2017-03-16)<br>claims, paragraphs [0031]-[0043] | 19-20, 22-23<br>1-18, 21, 24-25 |
| A | JP 2016-160416 A (HITACHI METALS, LTD.) 05 September 2016 (2016-09-05)<br>claims | 1-25 |
| A | JP 2019-529625 A (DOW GLOBAL TECHNOLOGIES LLC.) 17 October 2019 (2019-10-17) | 1-25 |
| A | US 2019/0169391 A1 (CABLE COMPONENTS GROUP, LLC) 06 June 2019 (2019-06-06) | 1-25 |
| A | JP 2013-147566 A (MITSUI CHEMICALS, INC.) 01 August 2013 (2013-08-01) | 1-25 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 October 2021** | **19 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2021/028802

C. DOCUMENTS CONSIDERED TO BE RELEVANT

| Category* | Citation of document, with indication, where appropriate, of the relevant passages | Relevant to claim No. |
|---|---|---|
| A | US 2019/0144627 A1 (IMERTS TALC AMERICA, INC.) 16 May 2019 (2019-05-16) | 1-25 |
| A | JP 2008-174752 A (DAIKIN INDUSTRIES, LTD.) 31 July 2008 (2008-07-31) | 1-25 |
| A | WO 2019/188898 A1 (FURUKAWA ELECTRIC CO., LTD.) 03 October 2019 (2019-10-03) | 1-25 |
| A | WO 2017/073551 A1 (SUMITOMO ELECTRIC INDUSTRIES, LTD.) 04 May 2017 (2017-05-04) | 1-25 |

Form PCT/ISA/210 (second sheet) (January 2015)

**INTERNATIONAL SEARCH REPORT**
**Information on patent family members**

International application No.
**PCT/JP2021/028802**

| Patent document cited in search report | Publication date (day/month/year) | Patent family member(s) | Publication date (day/month/year) |
|---|---|---|---|
| WO 2005/019320 A1 | 03 March 2005 | US 2007/0009727 A1 claims<br>EP 1661942 A1<br>CN 1842562 A | |
| JP 2017-54800 A | 16 March 2017 | US 2018/0240572 A1 claims<br>WO 2017/030152 A1<br>EP 3340256 A1<br>CN 107924738 A | |
| JP 2016-160416 A | 05 September 2016 | (Family: none) | |
| JP 2019-529625 A | 17 October 2019 | US 2019/0203011 A1<br>WO 2018/049555 A1<br>EP 3512912 A1<br>CN 109689767 A<br>KR 10-2019-0055094 A | |
| US 2019/0169391 A1 | 06 June 2019 | WO 2019/109073 A2<br>EP 3717550 A2 | |
| JP 2013-147566 A | 01 August 2013 | (Family: none) | |
| US 2019/0144627 A1 | 16 May 2019 | WO 2017/189128 A1<br>EP 3448924 A1 | |
| JP 2008-174752 A | 31 July 2008 | US 2004/0198886 A1<br>WO 2003/000792 A1<br>CN 1639254 A | |
| WO 2019/188898 A1 | 03 October 2019 | US 2021/0012926 A1<br>EP 3780015 A1 | |
| WO 2017/073551 A1 | 04 May 2017 | US 2018/0033518 A1<br>CN 107112084 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 10045931 A
- JP 2014224229 A
- JP 2013147566 A
- JP 11130892 A
- US 4764538 A
- JP 2017128119 A
- WO 2005052015 A

### Non-patent literature cited in the description

- *Polym. Eng. Sci.,* 1974, vol. 14 (2), 147